# EUROPÄISCHE PATENTSCHRIFT

(11) **EP 3 165 945 B1**
(45) Veröffentlichungstag und Bekanntmachung des Hinweises auf die Patenterteilung: **03.01.2024**
(21) Anmeldenummer: 15192815.7
(22) Anmeldetag: 03.11.2015
(51) Int. Cl.: G01S 17/42, G01S 17/86, G01S 17/89, G01S 7/00, G01S 7/48, G01S 7/481, G01S 7/497, B64B 1/40, B64C 39/02, B64U 10/13, B64U 10/30, G05D 1/00, G05D 1/08, F03D 17/00, B64U 101/30

(54) **OBERFLÄCHENVERMESSUNGSGERÄT ZUR BESTIMMUNG VON 3D-KOORDINATEN EINER OBERFLÄCHE**
SURFACE MEASURING DEVICE FOR DETERMINING THE 3D COORDINATES OF A SURFACE
APPAREIL DE MESURE DE SURFACE DESTINÉ À DÉTERMINER DES COORDONNÉES 3D D'UNE SURFACE

(43) Veröffentlichungstag der Anmeldung: 10.05.2017
(73) Patentinhaber: Leica Geosystems AG, 9435 Heerbrugg (CH)
(72) Erfinder: DOLD, Jürgen, CH-6204 Sempach (CH); HARRING, Thomas, CH-6340 Baar (CH); BÖCKEM, Burkhard, CH-5415 Rieden AG (CH)
(74) Vertreter: Kaminski Harmann

(56) Entgegenhaltungen:
- EP-A1- 2 811 318
- WO-A1-2007/141795
- US-A1- 2004 167 682
- US-A1- 2012 303 179
- US-A1- 2014 259 549
- US-A1- 2014 267 627

## Beschreibung

Die Erfindung betrifft ein Vermessungsgerät mit einer Abtasteinheit zur Bestimmung einer Vielzahl von 3D-Koordinaten von Messpunkten einer Oberfläche nach dem Oberbegriff des Anspruchs 1, ein Verfahren zum Bestimmen von 3D-Koordinaten nach Anspruch 12 und ein unbemanntes, schwebefähiges Fluggerät zur Verwendung als Träger einer Abtasteinheit gemäss Anspruch 1 nach Anspruch 14.

Vermessungsgeräte zum Erfassen, z.B. zwecks Vermessung, Prüfung oder Dokumentation, von Topographien eines zu vermessenden Objektes, z.B. eines Gebäudes oder Geländes, sind beispielsweise als Scanner oder Profiler bekannt. Beispielsweise wird in der PCT/EP2008/009010 eine Vorrichtung beschrieben, die schnell und dynamisch mit bewegtem Messtrahl Distanzen messen kann. Anwendungen sind einfache Rotationsscanner oder Profiler mit Ausrichtung zum Lot. Ein Vermessungsgerät zur dreidimensionalen Vermessung eines Objekts erfasst jeweils die räumliche Position eines Oberflächenpunktes des Objekts, d.h. seine 3D-Koordinaten, indem emittierte Laserstrahlung von der Objektoberfläche diffus gestreut remittiert wird und anhand von remittierter Laserstrahlung die Entfernung zum angezielten Oberflächenpunkt gemessen wird. Hierzu weist das Vermessungsgerät eine Abtasteinheit mit einer Laserstrahlquelle, einer Ablenkeinrichtung zum Verschwenken der Laserstrahlung, Erfassungsmitteln zur Erfassung der remittierten Laserstrahlung und einem Detektor bzw. Distanzmesser auf. Diese Distanzmessung wird mit Winkel- bzw. Richtungsinformation der Laseremission verknüpft, so dass aus diesen Entfernungs- und Winkelinformationen die räumliche Lage des erfassten Punktes bestimmt und die Oberfläche des Objekts fortlaufend vermessen werden kann. Derartige Oberflächenvermessungsgeräte nach dem Stand der Technik befähigen einen Benutzer, grosse Oberflächen und Objekte mit einem relativ geringen Zeitaufwand -in Abhängigkeit einer gewünschten Punkt-Zu-Punkt-Auflösungvollständig und gegebenenfalls mit zusätzlichen Objektinformationen zu erfassen, wobei Zielpunkte mit einer sehr hohen Rate, z.B. von mehreren Hunderttausend Punkten pro Sekunde, aufgenommen werden können. Es sind also in kurzer Zeit die Entfernungen zu einer Vielzahl von Punkten in Abhängigkeit des jeweiligen Scannwinkels erfassbar. Durch eine solche Vermessung einer Vielzahl von Punkten ist eine 3D-Punktwolke generierbar, die die dreidimensionale Beschaffenheit der Objektoberfläche mittels einer Punktmenge mit definierten Punktpositionen in einem gemeinsamen Koordinatensystem repräsentiert. Die Punkt-zu-Punkt-Auflösung der erfassten Objektpunkte und der resultierenden Punktwolke wird durch Geschwindigkeit, mit der der Laserstrahl über die Oberfläche verschwenkt wird, und die Abtastrate festgelegt. Die Auflösung beträgt bei Laserscannern beispielsweise 1.0 mm auf 100m Messstrecke.

Beispielsweise ist in der WO 97/40342 ein Verfahren beschrieben, welches durch ortsfest aufgestellte Vermessungsgeräte eine Topographie aufnimmt. Für diese Geräte wird ein fixer Aufstellungspunkt gewählt, der als Basis eines durch Motoren bewirkten Abtastvorgangs bzw. Scanvorgangs dient, so dass also der Aufnahme- bzw. Scanstandort (als Position der Abtasteinheit relativ zum abgetasteten Objekt) während des Abtastens unverändert bleibt. Die dreidimensionale Ortsinformation des jeweiligen Oberflächenpunktes ist über die Entfernung zum gemessenen Punkt, die Winkelstellung im Zeitpunkt der Messung und den bekannten Standort der Vorrichtung ableitbar. Dabei sind die Scanner- oder Profilersysteme, insbesondere deren Distanzmesser, speziell für die Aufgabe der Topographieerfassung ausgelegt und tasten eine Oberfläche durch Bewegung der Abtasteinheit oder durch Veränderung des Strahlgangs in einer Achse (Profiler) oder zwei Achsen (Scanner) ab.

Andere Verfahren verwenden mobile Oberflächenvermessungsgeräte, die eine zu erfassende Oberfläche durch eine Bewegung des Geräts abtasten bzw. die Abtastung unterstützen oder ergänzen. Die PCT/EP2014/059138 offenbart einen mobilen Profiler, welcher eine Abtasteinheit auf einem von einem Benutzer trag- bzw. versetzbaren Vermessungsstab (Lotstab) als Träger aufweist. Die Abtasteinheit weist einen Laser auf, wobei der erzeugte Laserstrahl um eine Achse rotierbar ist, so dass eine Laserebene aufgespannt wird, deren Schnittlinie mit der zu vermessenden Oberfläche das Messprofil aus einer Vielzahl von Messpunkten ergibt. Am Vermessungsstab ist weiter ein GNSS-Empfänger angebracht zum Bestimmen der Position des Vermessungsgeräts. Zudem weist das Vermessungsgerät ein Kameramodul auf, das ebenfalls vom Vermessungsstab getragen wird und optional eine Inertial-Measurement-Unit (IMU) aufweist. Mit Hilfe dieser Mittel werden Position und Orientierung des Vermessungsstabs bzw. durch die fixe relative Lage der Einheiten zueinander die Position und Orientierung z.B. der Abtasteinheit bestimmt. Somit kann durch das Abtasten mit dem Laserstrahl unter Berücksichtigung der relativen Lage bzw. Bewegung des Vermessungsgeräts bzw. Abtasteinheit zur Oberfläche eine Punktwolke generiert werden, welche die Oberfläche des zu vermessenden Objekts repräsentiert. Vorteilhaft an einem mobilen bzw. tragbaren Oberflächenvermessungsgerät ist, dass der Aufnahmestandort einfach veränderbar ist und damit z.B. sehr ausgedehnte bzw. langgestreckte Oberflächen vermessbar sind. Nachteilig an dem in der PCT/EP2014/059138 offenbarten Gerät ist, dass das Tragen eines solchen Geräts für den Benutzer mühsam und der Lotstab unhandlich ist, und dies umso mehr, je länger der Vermessungsstab ist. Gleichzeitig wäre für manche Vermessungsaufgaben, z.B. dem Erzeugen von 3D-Koordinaten eines hohen Objektes wie einem mehrstöckigen Gebäude oder eines sich weit über einer Bodenebene befindlichen Objektes, wünschenswert, wenn die Abtasteinheit möglichst hoch bzw. weit über der Bodenebene positionierbar wäre.

Die US 2014/0267627 A1 offenbart einen 3D Scanner zum Erfassen des Zustands einer Struktur, z.B. eines Hausdachs, wobei der 3D Scanner auf einem Fluggerät angeordnet ist, welches mittels einer Leine an einer Basisstation befestigt ist. Die US 2014/0259549 A1 offenbart ein ferngesteuertes fliegendes Scan-Gerät, welches mittels einer Halteleine mit einer Bodenstütze verbunden ist, wobei zur weiteren Führung der Halteleine Ösen verwendet werden.

Die EP 2 811 318 A1 offenbart eine gestengesteuerte Abtasteinheit.

Es ist daher eine Aufgabe der vorliegenden Erfindung ein verbessertes Oberflächenvermessungsgerät, vorzugsweise eines 3D-Scanners oder Profilers, bereitzustellen.

Eine weitere Aufgabe der vorliegenden Erfindung ist die Bereitstellung eines mobilen Oberflächenvermessungsgeräts, vorzugsweise eines 3D-Scanners oder Profilers, mit verbesserter Handhabung durch einen Benutzer.

Eine weitere Aufgabe der vorliegenden Erfindung ist die Bereitstellung eines mobilen Oberflächenvermessungsgeräts, vorzugsweise eines 3D-Scanners oder Profilers, mit verbesserter Positionierbarkeit.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gegenstand der Erfindung ist ein Oberflächenvermessungsgerät, vorzugsweise ausgebildet als 3D-Scanner oder Profiler zur Bestimmung einer Vielzahl von 3D-Koordinaten von Messpunkten einer Oberfläche. Optional ist das Oberflächenvermessungsgerät ausgebildet zum Erzeugen einer die Oberfläche repräsentierenden 3D-Punktwolke basierend auf den 3D-Koordinaten. Das Oberflächenvermessungsgerät weist eine Abtasteinheit zum optischen Abtasten der Oberfläche auf. Die Abtasteinheit weist eine Sendeeinheit zur Emission optischer, kohärenter und kollimierter Messstrahlung, vorzugsweise Laserstrahlung, eine Ablenkeinrichtung zur abtastenden Führung der Messstrahlung über die Oberfläche in wenigstens eine Ablenkrichtung, Mittel zum Erfassen der jeweiligen relativen Ablenkrichtung und einen Detektor zur Detektion der von einem jeweiligen Messpunkt reflektierten Messstrahlung auf. Unter der relativen Ablenkrichtung wird dabei die Ablenkrichtung verstanden, in die die Messstrahlung durch die Führung der Ablenkeinrichtung jeweils emittiert wird in Bezug zur Abtasteinheit bzw. zu einer Referenzrichtung, z.B. eine Nullrichtung, die sich auf das Oberflächenvermessungsgerät bezieht. Weiter weist das Oberflächenvermessungsgerät Mittel zur Bestimmung einer Position und Orientierung der Abtasteinheit auf und eine Steuer- und Auswerteeinheit mit einer Oberflächenvermessungsfunktionalität zur Steuerung der Abtasteinheit und zur Bestimmung der 3D-Koordinaten der Messpunkte anhand der jeweiligen Ablenkrichtung und eines mittels detektierter Messstrahlung abgeleiteten Distanzwerts. Die Distanz ist dabei eine Entfernung vom Oberflächenvermessungsgerät oder der Abtasteinheit zur Oberfläche oder genauer des jeweiligen Messpunkts der OBerfläche. Zudem weist das Oberflächenvermessungsgerät einen Träger zum Tragen der Abtasteinheit und wenigstens eines Teils der Mittel zur Bestimmung einer Position und Orientierung auf.

Erfindungsgemäss ist der Träger ausgebildet ist als schwebefähiges unbemanntes Fluggerät mit einer Leine, welche an ihrem einen Ende mit dem Fluggerät verbunden und am anderen Ende von einem Benutzer haltbar ist. Die Leine ist vorgesehen zur Führung des Fluggeräts in der Luft durch den Benutzer und durch die, vorzugsweise durch den Benutzer veränderbare, effektive Länge der Leine ist die Positionierung des Fluggeräts in der Luft vorgegeben. Vorzugsweise ist mittels der Leine auch die Ausrichtung des Fluggeräts vorgegeben. Unter effektiver Länge der Leine ist hierbei die Länge zu verstehen, die die Leine zwischen dem Fluggerät und ihrem Benutzerhaltepunkt einnimmt. Die vollständige Länge der Leine kann damit übereinstimmen, ist im Falle einer veränderbaren effektiven Länge jedoch grösser, so dass z.B. ein Stück der Leine vom Benutzer aufgerollt werden kann, um die effektive Länge zu verringern. Die Länge der Leine beträgt z.B. etwa ein bis wenige Meter, vor allem für Vermessungsgeräte, die für den Innenbereich vorgesehen sind, bis zu mehreren zehn Metern für Vermessungen im Aussenbereich, wobei auch Leinenlängen bis etwa 80m-100m denkbar sind.

Erfindungsgemäss wird also ein Teil des Oberflächenvermessungsgeräts von einem schwebefähigen Fluggerät getragen, vor allem die Abtasteinheit, so dass die Abtasteinheit in der Luft positionierbar ist, wobei die Positionierung des Fluggeräts und damit der Abtasteinheit, darunter deren Höhe über der Bodenebene bzw. über dem Standort des Benutzers durch die Leine vom Benutzer vorgegeben ist. Zudem ist das Fluggerät mittels der Leine vom Benutzer führbar, so dass die Abtasteinheit mobil vom Benutzer durch die Luft zu einem gewünschten Standort in der Luft gebracht werden kann, z.B. indem der Benutzer zur Bodenprojektion des gewünschten Standorts oder deren Nähe läuft und die Leine festhält bzw. zieht. Die Leine dient also als primäres oder vorrangiges Element, mit dem der Benutzer das Fluggerät zumindest in Hinsicht der Translation steuert. Damit sind vorteilhaft Standorte für die Abtasteinheit erreichbar und damit Oberflächen verbessert oder überhaupt vermessbar, die mit Oberflächenvermessungsgeräten des Stands der Technik, welche z.B. fix bodenstationär sind oder von einem Vermessungsstab getragen werden, nicht oder nur schlecht erreichbar sind. Beispielsweise sind damit detailreiche Strukturen, die sich nicht bodennah befinden, wie es häufig an historischen Strukturen oder Gebäuden vorzufinden sind, 3D-vermessbar. Zudem bietet die vorliegende Erfindung Vorteile hinsichtlich der Oberflächenvermessung hoher bzw. ausladender Objekte wie Kirchen, Schlösser, Denkmäler, Industriegebäude (Raffinerien oder Maschinenhallen), Schwermaschinen, Flugzeuge oder Schiffe, dies sowohl im Innen- wie im Aussenbereich.

Erfindungsgemäss ist die Leine zudem elektrisch leitfähig. In einigen Ausführungsformen dienst sie dabei als Stromkabel zur Energieversorgung von sich in der Luft befindlichen Teilen des Oberflächenvermessungsgeräts, vor allem des Fluggeräts, (besonders, wenn dieses motorbetrieben ist) und/oder der Abtasteinheit. Alternativ oder zusätzlich wird die elektrische Leitfähigkeit der Führungsleine zur Steuer- und/oder Datensignalübertragung verwendet, so dass die Leine als Daten- bzw. Signalkabel von und/oder zu sich in der Luft befindlichen Teilen des Oberflächenvermessungsgeräts dient. Erfindungsgemäß sind so neben der beschriebenen primären Steuerung bzw. Führung mittels der Leine auf mechanische Art elektrische Steuersignale vom Benutzer an das Fluggerät und die Abtasteinheit übermittelbar und/oder Daten, vor allem Messdaten wie die erfasste Ablenkrichtung oder Distanzwerte oder die 3D-Koordinaten, werden von der Abtasteinheit an eine Benutzereinheit übertragen.

Die Benutzereinheit ist dabei Teil des Vermessungsgeräts und z.B. ausgebildet als handhaltbarer Feldrechner (field controller), welcher vorzugsweise an die als Kabel dienende Leine angeschlossen ist oder alternativ drahtlos mit anderen Einheiten des Vermessungsgeräts kommuniziert. Alternativ handelt es sich um eine externe Benutzereinheit wie ein Smartphone oder Tablet. Optional weist dabei das Oberflächenvermessungsgerät, bevorzugt die Leine, eine Schnittstelle auf (drahtgebunden wie z.B. USB oder drahtlos wie z.B. Bluetooth) zum Anschluss der externen Benutzereinheit.

Da der Träger sechs Freiheitsgrade für den Abtaststandort bzw. der Position und Orientierung der Abtasteinheit ermöglicht, sind die Mittel zur Bestimmung einer Position und Orientierung entsprechend zur Herleitung bzw. Ermittlung der sechs Freiheitsgrade des Trägers bzw. der Abtasteinheit ausgebildet. Optional sind dabei, bevorzugt in als Profiler ausgebildeten Ausführungsformen, die Mittel zur Bestimmung der Position und Orientierung ausgebildet zur, vorzugsweise fortlaufenden, aktiven Bestimmung der Position und Orientierung zum Erhalt von Positions- und Orientierungswerten als speicherbare Daten, so dass diese dauerhaft und insbesondere nach Abschluss der Vermessung vorliegen und translatorische und/oder rotatorische Beschleunigungen bzw. Positions- und/oder Orientierungsveränderungen der Abtasteinheit (oder des Messobjekts) gemessen und die gemessenen Beschleunigungen beim Bestimmen der 3D-Koordinaten des Objekts bzw. der Oberfläche berücksichtigt werden. Alternativ oder zusätzlich sind die Mittel ausgebildet zur fortlaufenden passiven Bestimmung der Position und Orientierung zum Zwecke der Flugstabilisierung des Fluggeräts. Bei der passiven Bestimmung können die Positions- und Orientierungswerte also als flüchtige, nicht-permanente Daten behandelt werden, die instantan zur Optimierung des Flugverhaltens des Fluggeräts verwendet und danach verworfen werden können.

Optional weisen die Mittel zur Bestimmung der Position und Orientierung trägerseitig Sensoren zur fortlaufenden Messung einer Beschleunigung und/oder Drehrate und/oder magnetischen Ausrichtung auf. Beispielsweise weisen die Mittel einen 3-Achsen-Beschleunigungssensor, ein 3-Achsen-Gyroskop, Neigungssensoren oder eine Inertial Measurement Unit (IMU) auf. Weiter weisen die Mittel im Rahmen dieser Option wenigstens eine Kamera zur fortlaufenden Bildaufnahme einer Bilderserie im Rahmen einer kamerabasierten Selbstlokalisierung und/oder Empfänger zum fortlaufenden Empfang von Positionsreferenzsignalen, insbesondere GNSS-Signalen und/oder Pseudolit-Signalen, auf. Zudem ist die Steuer- und Auswerteeinheit ausgebildet zur Ausführung eines Algorithmus, vorzugsweise eines Zustands-Schätz-Algorithmus, welcher im Speziellen basierend auf einem Kalman-Filter ist, zur fortlaufenden Berechnung der Position und Orientierung anhand sowohl der fortlaufend ermittelten Daten der Sensoren (also z.B. deren gemessene Beschleunigungswerte) als auch derjenigen der Kamera und/oder Signalempfänger, wobei die Berechnung vorzugsweise in Echtzeit erfolgt.

Bei Ausführungsformen gemäss der vorab geschilderten Option mit einer Kamera zur kamerabasierten Selbstlokalisation ist der Algorithmus, zu dessen Ausführung die Steuer- und Auswerteeinheit ausgebildet ist, ausgebildet zur Bestimmung von Position und Orientierung von Bildern der Bilderserie basierend auf Rückwärtsschnitt mit Hilfe von Oberflächenpunkten, die in mindestens zwei Bildern der Bilderserie erfasst sind. Dabei weist der Algorithmus vorzugsweise Structure-from-Motion- (SfM) oder SLAM-Algorithmen auf, bzw. derartige Routinen sind Teil des Algorithus. Optional werden die Oberflächenpunkte zum Rückwärtsschnitt mittels feature-extraction-Algorithmen und/oder tracking-Algorithmen ausgewählt.

In einigen Ausführungsformen ist das Fluggerät passiv, d.h. antriebs- und steuermittellos. Vorzugsweise ist dabei das Fluggerät ausgebildet als Ballon, der beispielsweise mit Helium gefüllt ist. Der Vorteil derartiger Ausführungsformen sind vor allem einfacher Aufbau und der geringe Energieverbrauch, und damit geringe Herstellungs-, Betriebs- und Wartungskosten.

In bevorzugten Ausführungsformen hingegen weist das Fluggerät wenigstens ein Antriebsmittel (Motor bzw. Rotor) und/oder Steuerungsmittel, z.B. Ruder oder Rotor, zur aktiven Anpassung der durch die effektive Länge der Leine vorgegebenen Position und/oder Ausrichtung auf. Vorzugsweise ist ein solches aktives Fluggerät ausgebildet als Zeppelin bzw. Luftschiff, d.h. als Fluggerät, bei dem der Auftrieb wenigstens teilweise durch eine Gasfüllung erzielt wird, oder als Copter, d.h. ein Fluggerät, bei dem der Auftrieb durch Rotoren erzeugt wird. Die vorliegende Erfindung bietet mit einem aktiven Fluggerät als Träger weitere Vorteile. Gegenüber einem völlig freifliegenden und z.B. funkgesteuerten Fluggerät als Träger, bei dem also im völligen Gegensatz zu einem Vermessungsstab als Träger gar keine mechanische Führung durch den Benutzer und Führung relativ nah am Benutzer erfolgt, ist von Vorteil, dass die Handhabung bzw. Führung vereinfacht und sicherer ist, so dass auch mit Flugsteuerung unerfahrene Benutzer das Vermessungsgerät handhaben können und ein Einsatz z.B. im Innenbereich, vor allem bei relativ kleinen oder verwinkelten Räumen mit hoher Kollisionsgefahr, besser bzw. überhaupt erst ermöglicht ist.

Gegenüber Ausführungsformen mit passivem Fluggerät ist von Vorteil, dass ein solches aktives Fluggerät je nach Ausführung eine aktive Anpassung der Positionierung und/oder Ausrichtung ermöglicht, worunter beispielsweise eine Ausrichtung der Abtasteinheit auf die zu vermessende Oberfläche verstanden wird, so dass z.B. eine homogene oder weniger ungleichmässige Verteilung der Messpunkte bzw. der Punkte der 3D-Punktwolke erzielt wird. Mit anderen Worten ist es damit z.B. ermöglicht, die Scanebene optimiert auszurichten bzw. zu positionieren, so dass z.B. Mittel zur internen Ausrichtungskorrektur der Abtasteinheit, wie sie z.B. die PCT/EP2014/059138 offenbart, unnötig sind. Derartige Mittel können optional, vor allem bei einem rein passiven Fluggerät, vorgesehen sein. Zudem kann vorteilhaft im Rahmen der durch die Leine vorgegebenen Bewegungsfreiheit der Standort des Fluggeräts und damit der Abtasteinheit kleinräumig verändert werden, es erfolgt also eine Anpassung der Mikrolage, z.B. um Sichthindernisse zu umschiffen oder Bereiche einsehbar bzw. für die Messstrahlung und damit für das Abtasten zugänglich zu machen, die bei Positionierung ausschliesslich mit der Leine (wie es bei einem völlig passiven Fluggerät ausschliesslich möglich ist) nicht vermessbar sind. Beispielsweise sind so schwer zugängliche Ecken eines Gebäudes oder höhlenartige Kleinräume vermessbar.

Die aktive Anpassung der Positionierung und/oder Ausrichtung erfolgt optional anhand von Steuerbefehlen des Benutzers, wobei die Steuerbefehle vorzugsweise mittels einer Benutzereinheit, im Speziellen einem Smartphone oder einem Tablet erteilt werden. Die Steuerbefehle werden dabei optional durch Multi-Touch-Eingaben und/oder per Bewegung der Benutzereinheit auf einem berührungssensitiven Benutzerfeld der Benutzereinheit eingegeben. Alternativ oder zusätzlich weist die Benutzereinheit z.B. einen Steuerknüppel oder ein Steuerkreuz auf. Erfindungsgemäß erfolgt die Steuerung des Fluggeräts und auch der Abtasteinheit durch den Benutzer berührungslos durch Gesten, wozu die Steuer- und Auswerteeinheit eine Gestensteuerungsfunktionalität aufweist, so dass aufgenommene Bewegungsbilder von Handbewegungen des Benutzers als Steuerbefehle interpretierbar sind und entsprechende Steuerbefehle an das Fluggerät und die Abtasteinheit ausgebbar sind. Beispielsweise ist am Träger, z.B. an der Unterseite des Fluggeräts, eine Kamera angeordnet, die in Richtung Benutzer bzw. Benutzerhand ausgerichtet ist und fortlaufend Bilder der Hand erfasst, so dass z.B. eine schnelle Handbewegung in eine Richtung als Befehl zur Bewegung des Fluggeräts durch dessen Antrieb in diese Richtung erkannt werden. Für eine verbesserte Erkennung kann die Benutzerhand dabei ein Hilfsmittel aufweisen, z.B. ein Träger optischer Markierungen. Optional erfolgt eine Steuerung durch den Benutzer, indem die Verbindung der Leine mit dem Fluggerät als Steuermodul ausgebildet ist, so dass durch eine vom Benutzer kontrollierte Veränderung eines Zustands der Leine, insbesondere der anliegenden Zugspannung und/oder Zugrichtung, ein Steuerbefehl vom Benutzer an das Fluggerät, vorzugsweise zur aktiven Veränderung der Positionierung und/oder Ausrichtung, und an die Abtasteinheit, insbesondere zum Start und/oder Beenden eines Abtastvorgangs, ausgebbar ist. Weiter erfolgt die aktive Anpassung der Positionierung und/oder Ausrichtung alternativ oder zusätzlich anhand von von in der Steuer- und Auswerteeinheit einprogrammierten Routinen zur semiautonomen Eigenbewegung des Fluggeräts (semiautonom dahingehend, dass die Eigenbewegung immer im Rahmen der Richt-Positionsvorgabe durch die Leine erfolgt). Derlei Routinen umfassen z.B. die Bewegung entlang einer vordefinierten Spur, beispielsweise angepasst an die Art des zu vermessenden Objekts. So kann z.B. bei einem vollständig topographisch zu erfassenden Innenraum eine selbstständige Drehung des Fluggeräts um etwa 360° um die Hochachse erfolgen, bevorzugt bei als Profiler ausgebildeten Ausführungsformen. Weiterhin erfolgt zusätzlich oder alternativ eine Positionierungs- und/oder Ausrichtungsanpassung anhand von Steuerbefehlen der Steuer- und Auswerteeinheit, welche auf aktuellen Messwerten, insbesondere Beschleunigungs- und/oder Distanzwerten, von Sensoren des Fluggeräts basieren. Die Steuer- und Auswerteeinheit ist dann also zur automatischen Anpassung ausgebildet, welche reaktiv auf erfasste Sensorwerten, z.B. Abstandswerten oder Neigungswerten erfolgt. So erfolgt z.B. eine automatische Anpassung des Abstands zu einer Messoberfläche zur Optimierung der Messwerterfassung oder Kollisionen mit Hindernissen oder dem Messobjekt werden dadurch vermieden.

Da ein Problem bei der Durchführung einer Oberflächenvermessung ist, dass prinzipiell sehr hohe Rechenleistungen benötigt werden, um eine Punktwolke einer Oberfläche dreidimensional zu erfassen und zu verarbeiten, insbesondere dann, wenn aufgrund einer Bewegung des Messsystems erfasste Scannzeilen zusammengefügt werden sollen, ist es vorteilhaft, wenn diese Rechenleistung "zum Boden" hin, also z.B. an eine sich beim Benutzer befindliche Benutzereinheit "ausgelagert" werden. So werden also optional die Rohdaten der Vermessung (3D-Koordinaten oder die diesen zugrunde liegenden Ablenkrichtungswerte und Distanzwerte oder die den Ablenkrichtungswerten und Distanzwerten zugrunde liegenden unmittelbaren Detektorwerte) über die Leine als Datenkabel (oder alternativ drahtlos per Bluetooth, WLAN o.ä.) an die Benutzereinheit gesendet und diese Rohdaten von der Benutzereinheit ausgewertet.

Diese Datenübertragung erfolgt bevorzugt "on the fly", also noch vor Ort bzw. während des Vermessungsvorgangs. Die Auswertung umfasst dabei optional die Erzeugung einer 3D-Punktwolke basierend auf den 3D-Koordinaten, wobei die Punktwolke graphisch auf einem Display der Benutzereinheit dargestellt wird. Damit hat der Benutzer noch vor Ort bzw. während der mit dem geführten Träger bewerkstelligten Messwertaufnahme bzw. unmittelbar nach deren Abschluss bereits die Punktwolke als Messergebnis (zumindest teilweise bzw. als grobe Punktwolke) vorliegen. Beispielsweise ist vorteilhaft damit auch bei einer Inspektion oder Vermessung des Innen- oder Aussenbereichs eines Gebäudes noch vor Ort eine Verwendung von Messergebnissen möglich, z.B. eine graphische Darstellung des gesamten Innenraums oder der Aussenhülle. Auch ist damit optional möglich, dass der Benutzer z.B. direkt eine erste Bewertung des Vermessung vornehmen kann und z.B. zusätzliche Oberflächenvermessungen von sich als hochrelevant ergebenden oder fehlerhaft vermessenen Oberflächenbereichen durchführen kann (wobei die Messergebnisse hierzu natürlich nicht unbedingt als 3D-Punktwolke vorliegen müssen, sondern z.B. in Tabellenform ausgegeben werden können). Alternativ oder zusätzlich erfolgt eine solche Aus- bzw. Bewertung noch vor Ort halb- oder vollautomatisch durch die Steuer- und Auswerteeinheit. Beispielsweise ist die Oberflächenvermessungsfunktionalität zusätzlich dergestalt ausgebildet, dass in der Menge von 3D-Koordinaten bzw. der entsprechenden 3D-Punktwolke Bereiche (regions of interest, ROI) erkannt werden, die automatisch als besonders interessant, fehlerbehaftet oder lückenhaft (z.B. aufgrund eines Scanschattens oder zu geringer Punktabdeckung beispielsweise bei einem sehr verformten Bereich) beurteilt werden. Das Ergebnis eines solchen Erkennens bzw. Beurteilens wird dem Benutzer auf der Benutzereinheit angezeigt, z.B. durch Darstellungen (farbige Markierungen, Pfeile o.ä.) in der graphischen Darstellung der 3D-Punktwolke oder Texthinweise, so dass der Benutzer entsprechend informiert ist und gegebenenfalls reagieren kann, indem er entweder die Anzeige oder den Hinweis verwirft (falls er selbst den oder die Bereiche nicht als besonders relevant erachtet) oder weitere Vermessungen, also ein Zweitabtasten, mit der Abtasteinheit eines oder mehrerer dieser ROI durchführt. Alternativ oder zusätzlich erfolgt ein Erkennen von ROIs durch den Benutzer, wozu er diese z.B. auf einem Touch-Screen der Benutzereinheit in der graphischen Darstellung der Punktwolke markiert und anhand dieser Benutzereingabe entsprechende Steuerbefehle zum Zweitabtasten von der Steuer- und Auswerteeinheit generiert werden. Als weitere Alternative oder weiterer Zusatz erfolgt in einer Fortbildung, bevorzugt bei Ausführungsformen mit einem selbstbeweglichen Fluggerät (z.B. Zeppelin, Copter) als Träger, eine Verwertung der automatischen oder händischen ROI-Erkennung vollautomatisch durch ein automatisches Zweitabtasten der ROIs, wozu gegebenenfalls im Rahmen der so fortgebildeten Oberflächenvermessungsfunktionalität das Oberflächenvermessungsgerät von der Steuer- und Auswerteeinheit zu einem Standort dirigiert wird, von dem aus ein weiteres Abtasten der ROI erfolgt. Dabei kann als Option diese vollautomatische Selbstbewegung des Fluggeräts völlig benutzerführungslos erfolgen, d.h. dass die Führung des Fluggeräts durch den Benutzer (mittels der Leine) temporär, also nur für eine begrenzte Zeit und lediglich im begrenzten Rahmen der Aufgabe der gezielten Zweit- bzw. Zusatzvermessung besonders relevanter Oberflächenbereiche, aufgegeben wird und sich das automobile Fluggerät zeitweise autonom verhält bzw. fortbewegt bzw. positioniert. Z.B. lässt hierzu der Benutzer die Leine los, wobei die Leine vom Fluggerät aufgerollt werden kann. Denkbar wäre auch, dass die Leine vom Fluggerät ausgeklingt wird und das Fluggerät sich nach Beendigung der Vermessung des oder der ROI automatisch in eine Landeposition begibt.

Als weitere Option weist das Oberflächenvermessungsgerät neben der Abtasteinheit eine weitere Oberflächenmesseinheit auf, beispielsweise eine Infrarotkamera und/oder Wärmebildkamera. Mit solchen Ausführungsformen lassen sich unterschiedliche Messaufgaben kombiniert ausführen bzw. Informationen unterschiedlicher Art über die zu vermessende Oberfläche gewinnen, so dass z.B. im Rahmen einer so fortgebildeten Oberflächenvermessungsfunktionalität die anhand der 3D-Koordinaten der Abtasteinheit erzeugte 3D-Punktwolke (bzw. die 3D-Koordinaten selbst) mit Messwerten der weiteren Oberflächenmesseinheit verknüpft werden. Dadurch wird dem Benutzer ein weiterer Vorteil in Form eines zusätzlichen Informationsgewinns verschafft, z.B. dergestalt, dass die graphische Darstellung der 3D-Punktwolke zusätzlich Informationen zur Temperatur der dargestellten Oberfläche enthält.

Als weitere Option weist das Fluggerät eine Reserveenergiequelle auf, so dass bei Versagen oder unbeabsichtigter Abkopplung der Primärenergiequelle, welche z.B. über die als Stromkabel ausgebildete Leine angeschlossen ist, eine Beendigung der Messaufgabe oder zumindest ein kontrollierter Abbruch möglich ist.

Gegenstand der vorliegenden Erfindung ist weiterhin ein Verfahren zum Bestimmen einer Vielzahl von 3D-Koordinaten von Messpunkten einer Oberfläche mit einem erfindungsgemäßen Oberflächenvermessungsgerät, wobei das Verfahren ein, insbesondere punktweises, räumlich versetzbares, optisches Abtasten der Messpunkte der Oberfläche mittels optischer, kohärenter und kollimierter Messstrahlung definierter Ablenkrichtung, insbesondere Laserstrahlung, umfasst. Weiterhin umfasst das Verfahren ein Ableiten von Distanzwerten anhand detektierter reflektierter Messstrahlung und ein Bestimmen von 3D-Koordinaten anhand der Distanzwerte und Ablenkrichtungen.

Bevorzugt wird anhand wenigstens eines Teils der 3D-Koordinaten noch während des Abtastens eine 3D-Punktwolke erzeugt wird. Optional erfolgt eine graphische Ausgabe der erzeugten 3D-Punktwolke auf einem Display, z.B. einer Benutzereinheit wie einem Tablet oder Smartphone. Als weiter Option erfolgt wie bereits beschrieben ein automatisches Erkennen besonders relevanter Bereiche (regions of interest, ROI) der 3D-Punktwolke, wobei im Speziellen eine graphische Darstellung des oder der besonders relevanten Bereiche auf einem Display und/oder ein automatisches Zweitabtasten des oder der besonders relevanter Bereiche mit dem Oberflächenvermessungsgerät erfolgt.

Weiterer Gegenstand der vorliegenden Erfindung ist ein Computerprogrammprodukt, das auf einem maschinenlesbaren Träger gespeichert ist, oder Computer-Daten-Signal, verkörpert durch eine elektromagnetische Welle, mit Programmcode zur Durchführung des erfindungsgemässen Verfahrens, insbesondere wenn das Programm in einer Steuer- und Auswerteeinheit eines erfindungsgemässen Oberflächenvermessungsgeräts und/oder einer daran angeschlossenen externen Benutzereinheit ausgeführt wird. Weiterer Gegenstand der vorliegenden Erfindung ist die Verwendung eines unbemannten, schwebefähigen Fluggeräts mit einer Leine, welche vorgesehen ist zur Führung des Fluggeräts in der Luft durch einen Benutzer, wobei durch die effektive Länge der Leine die Position des Fluggeräts in der Luft vorgegeben ist, zum Tragen der Abtasteinheit eines erfindungsgemäßen Oberflächenvermessungsgeräts.

Das erfindungsgemässe Vermessungsgerät und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a,b: Oberflächenvermessungsgeräte nach dem Stand der Technik;
- Fig. 2a: eine erste Ausführungsform eines erfindungsgemässen Oberflächenvermessungsgeräts;
- Fig. 2b: ein Beispiel für eine mittels des erfindungsgemässen Oberflächenvermessungsgeräts erzeugte 3D-Punktwolke;
- Fig. 3: eine zweite Ausführungsform eines erfindungsgemässen Oberflächenvermessungsgeräts; und
- Fig. 4a,b: weitere Ausführungsformen eines erfindungsgemässen Oberflächenvermessungsgeräts.

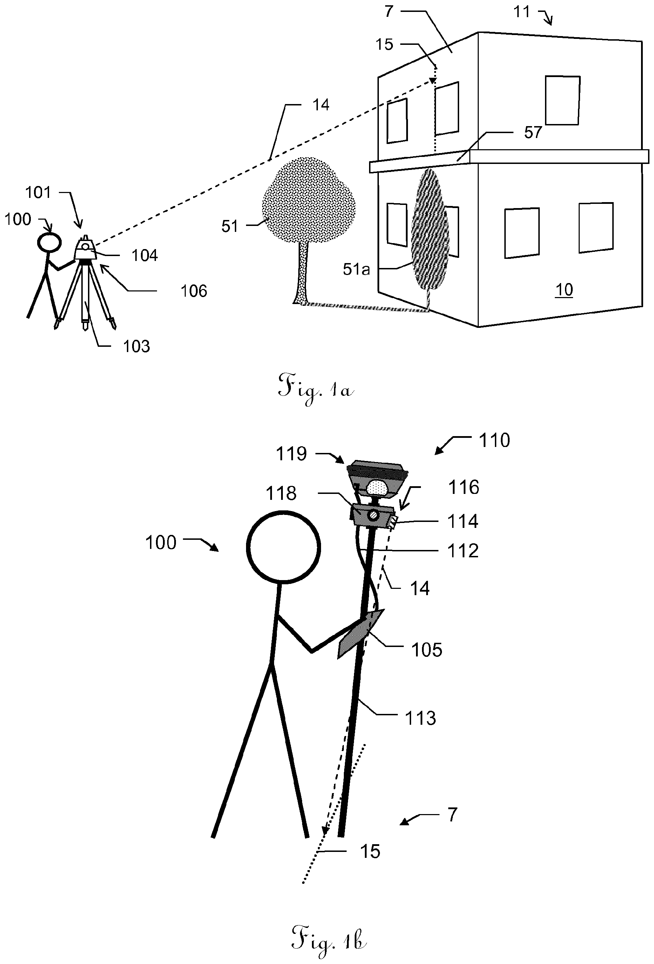

Figur 1a zeigt einen Benutzer 100 beim Scannen einer Oberfläche eines Objekts 10, im Beispiel ein Haus, mit einem stationären Oberflächenvermessungsgerät nach dem Stand der Technik, im Beispiel einen terrestrischen Laserscanner 101, mit einer Oberflächenvermessungsfunktionalität zum 3D-Vermessen von Objektoberflächen eines Objekts 10 nach dem Stand der Technik. Durch ein solches 3D-Vermessen wird eine 3D-Punktwolke erzeugt, die die Oberfläche 7 des Objekts 10 repräsentiert. Der Laserscanner 101 umfasst dabei eine Abtasteinheit, ausgebildet als Scaneinheit 104, die auf einem Dreibein 103 als Träger angebracht ist und einen Laserstrahl 14 als optische Messstrahlung emittiert, welche durch eine Ablenkeinrichtung mit Ablenkung um zwei Achsen abtastend über die Hausoberfläche 7 geführt wird, so dass die Messpunkte 15 abgetastet werden (in der Figur ist der Einfachheit halber nur ein Teil nur einer der vielen aufeinanderfolgenden Abtastzeilen dargestellt). Ein derartiger Laserscanner 101 nach dem Stand der Technik ermöglicht es, vom Standort 106 (der Abtasteinheit) in sehr kurzer Zeit anhand detektierter reflektierter Messstrahlung und der erfassten Ablenkrichtung der emittierten Messstrahlung die 3D-Koordinaten von Millionen von Oberflächenpunkten 15 mit hoher Präzision zu erfassen.

Nachteilig hierbei ist, dass aufgrund der Bodennähe des Standorts 106 ein relativ grosser Abstand zwischen Haus 10 und Scanner 101 gewählt werden muss. Bei einem kleineren Abstand sind oft die Sicht- bzw. Aufnahmewinkel zu Oberflächenpunkten im oberen Bereich der Hauswand derart ungünstig, dass die Präzision der 3D-Punktwolke darunter leidet und/oder ein sehr ungleichmässiges Punkteraster entsteht, so das die erzeugte 3D-Punktwolke eine stark variierende Punktdichte aufweist (Abtastzeilen weisen im Bereich des Oberteils einen grösseren Abstand der Messpunkte 15 auf als im Bereich des Unterteils der Hauswand). Ein grosser Abstand zum Objekt 10 ist jedoch aufgrund baulicher Gegebenheiten, z.B. einer engen Strasse, nicht immer möglich, oder er hat wie im Beispiel dargestellt den Nachteil, dass sich Objekte wie z.B. der Baum 51 zwischen dem Standort 106 und dem Objekt 10 befinden, welchen einen "Scanschatten" 51a hervorrufen, innerhalb dessen keine Punkte der Hauswand erfassbar sind. Die erzeugte Punktwolke umfasst dann anstelle der gewünschten Oberflächenpunkte des Hauses 10 Punkte der Oberfläche des störenden Objekts 51. Weiters ist unabhängig vom gewählten Abstand nachteilig, dass vom bodennahen Standort 106 aus die Oberseite des Objekts 10 gar nicht vermessbar ist, im Beispiel also das Dach 11 des Hauses 10 nicht gescannt werden kann. Ist zudem die Hauswand wie dargestellt nicht eben, sondern weist z.B. einen Mauervorsprung bzw. Sims 57 auf, so kann vom bodennahen Standort 106 dessen Oberkante ebenfalls nicht vermessen werden bzw. der Sims 57 erzeugt nach oben hin einen weiteren Scanschatten, der einen weiteren Teil der Hausoberfläche 7 abschattet.

Figur 1b zeigt ein weiteres Oberflächenvermessungsgerät nach dem Stand der Technik, ausgebildet als mobiler Profiler 110. Der Profiler 110 weist einen Lotstab 113 auf, der als Träger eine Abtasteinheit 114 fungiert. Mittels des Lotstabs 113 ist das Oberflächenvermessungsgerät 110 und damit der Standort 116 der Abtasteinheit vom Benutzer 100 veränderbar, aber nachteilig lediglich in einer horizontalen Ebene. Die Abtasteinheit 114 emittiert einen Laserstrahl 14, der um eine Achse im Beispiel etwa vertikal ablenkbar ist, so dass u.a. ein Bodenprofil von Messpunkten 15 entlang einer Linie des Bodens als zu vermessende Oberfläche 7 erfassbar ist. (Alternativ ist der Laserstrahl 14 horizontal verschwenkbar, so dass Horizontalprofile erfassbar sind, oder in einer sonstigen Ausrichtung um eine Achse verschwenkbar.) Durch Herumlaufen des Benutzers 100 während des Vermessens ist so nach und nach ein flächiges Bodenprofil erstellbar, wobei zur relativen Verknüpfung der einzelnen Messpunkte untereinander und damit zur Erzeugung der 3D-Punktwolke im Beispiel das Vermessungsgerät 110 ein Kameramodul 118 aufweist, welches mittels kamerabasierter Selbstlokalisierung zusammen mit einer GNSS-Antenne 119 und weiteren, nicht dargestellten Lage- bzw. Beschleunigungssensoren zur 6-DOF-Bestimmung des Lotstabs 113 bzw. der Abtasteinheit 114 dient. In Figur 1b ist die Abtasteinheit 114 im Gehäuse des Moduls 114 integriert. Weiter ist im Beispiel nach Figur 1b mittels eines Kabels 112 eine Controllereinheit 105 angeschlossen, die z.B. zur Steuerung des Abtastvorgangs dient. Nachteilig an einem solchen Profiler 110 nach dem Stand der Technik ist, dass zwar im Vergleich zu einem Gerät nach Figur 1a ein erhöhter Abtaststandort 116 vorliegt, dieser aber immer noch für die Vermessung hoher oder hoch über dem Boden gelegener Objekte nicht ausreichend ist. Für die Erstellung von Bodenprofilen ist weiter nachteilig, dass der Lotstab 113 wie dargestellt einen Teil des Bodens abschattet (bei einer vollständig vertikalen Ausrichtung des Laserstrahls 14 würde umgekehrt die GNSS-Antenne 119 nach oben hin abschatten). Zudem ist das Herumtragen eines langen und kopflastigen Lotstabs 113 für den Benutzer 100 mühsam.

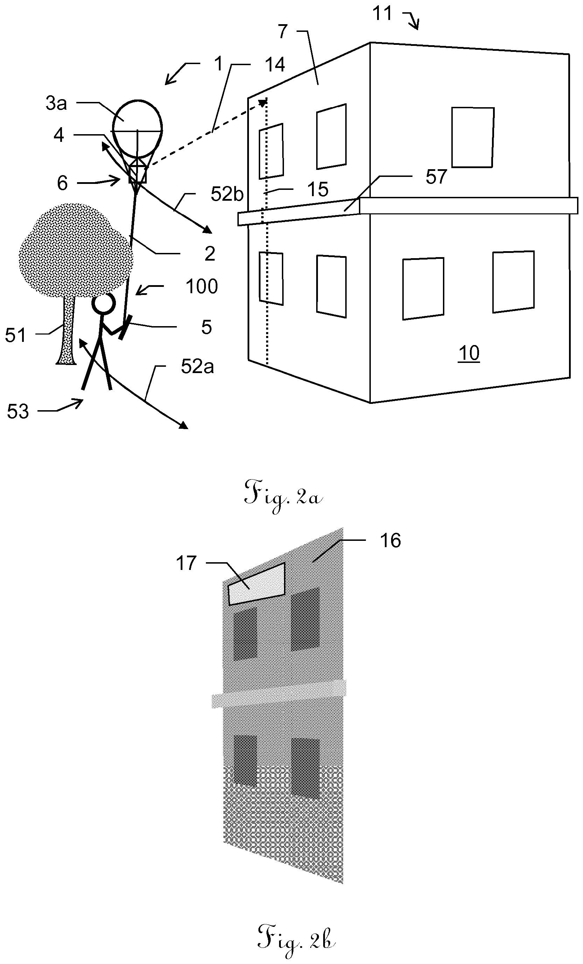

Fig. 2a zeigt ein erfindungsgemässes Oberflächenvermessungsgerät 1 mit einer Oberflächenvermessungsfunktionalität zum 3D-Vermessen von Oberflächen 7 eines Objekts 10. Das Oberflächenvermessungsgerät 1 weist eine Abtasteinheit 4 zum Oberflächenabtasten mittels Messstrahlung 14, d.h. zum Erstellen eines 3D-Scans oder 3D-Profils, auf, die von einem schwebefähigen unbemannten Fluggerät, im Beispiel ein gasgefüllter Ballon 3a, getragen wird. Der Ballon 3a ist dabei an einer Leine 2 befestigt, die vom Benutzer 100 gehalten wird. Die Schwebehöhe des Ballons 3a ist dabei durch die Länge der Leine 2 festgelegt, wobei die Leine 2 wenigstens leicht gespannt ist (wobei die Schwebehöhe natürlich auch von der Länge des Benutzers 100 und der Armhaltung abhängt, und die Gasfüllung des Ballons 3a auch exakt so austariert sein könnte, dass die gewünschte Schwebehöhe ohne Spannung der Leine 2 vom Ballon 3a gehalten wird). Ein Ballon 3a als rein passives Fluggerät bietet dabei den Vorteil einer äusserst einfachen und -abgesehen von ungünstigen Umgebungseinflüssen wie starke Windböen im Aussenbereichsehr gut kontrollierbaren Handhabung durch den Benutzer 100. Mittels der Leine 2 ist der Ballon 3a vom Benutzer 100 in einer gewünschten Höhe und durch Wahl seines Standorts 53 in gewünschter ebener Position haltbar, so dass die Abtasteinheit 4 an einem gewünschten Standort 6 positionierbar ist. Die Leine 2 dient also zur Führung des Ballons 3a durch den Benutzer 100, wobei durch die Länge der Leine 2 die Höhe des Ballons 3a in der Luft (der Ballon 3a steigt so weit auf, wie die Länge der Leine 2 im gespannten Zustand zulässt) und durch die Wahl des Benutzerstandorts 53 dessen horizontale Position, also insgesamt dessen Positionierung in der Luft vorgegeben ist. Optional ist mittels der Leine 2 auch die Ausrichtung des Fluggeräts 3a vom Benutzer 100 vorgebbar, z.B. durch Drehen der Leine 2.

Durch die erfindungsgemässe Vermessungsvorrichtung 1 ist es also sehr einfach der Abtaststandort 6 in den drei translatorischen und optional auch den drei rotatorischen Freiheitsgraden veränderbar und damit der Standort 6 der Scaneinheit 4 mit sehr viel weniger Einschränkungen als mit Vorrichtungen nach dem Stand der Technik wählbar. Dadurch können z.B. Sichthindernisse umgangen oder ansonsten nicht abtastbare Bereiche wie beispielsweise die Oberkante des Mauersims 57 erfasst werden. Auch ist es mittels des erfindungsgemässen Vermessungsgeräts 1 möglich, auf einfache Weise einzelne Details des zu vermessenden Objekts 10 gesondert und standortnah zu vermessen, besonders solche, die sich nicht in Bodennähe befinden, bei einem Gebäude 10 z.B. Verzierungen der Fassade. Vorteile bietet die vorliegende Erfindung u.a. auch bei kleinräumigen Geländevermessungen bzw. Erstellen von kleinräumigen Geländetopographien bzw. -profilen, welche von einem Standort am Boden nicht durchführbar sind und für welche eine Vermessung per Flugzeug zu aufwändig wäre. Ebenso ergeben sich mit dem erfindungsgemässen Vermessungsgerät 1 Vorteile für Vermessungen im Innenbereich, beispielsweise in Gebäuden mit sehr grossen Raumhöhen wie Fabrikhallen oder Kirchen. Z.B. ist es damit möglich, den Innenraum einer Kathedrale zu scannen (besonders vorteilhaft von einem nicht nur in Bezug auf die Horizontale, sondern auch in Bezug auf die Hochachse zentralen Standort 6, also in der dreidimensionalen Mitte des Raums) und dabei vor allem auch Oberflächen von Einzelelementen präzise und zumindest weitgehend vollständig selbst in solchen Höhen zu vermessen, die mit Vorrichtungen des Stands der Technik gar nicht oder nur mit grossem Aufwand erfassbar sind bzw. deren Vermessung mit einem frei fliegenden Fluggerät als Träger der Vermessungseinheit 4 zu gefährlich wäre. Aber auch andere sehr grosse bzw. hohe Objekte sind mit der erfindungsgemässen Vermessungsvorrichtung 1 vereinfacht bzw. verbessert oder überhaupt vermessbar wie z.B. Schiffsrümpfe, Schwermaschinen oder Raketenhüllen z.B. im Rahmen von Qualitätskontrollen, Zustandsüberprüfungen oder Reverse Engineering.

Im vorliegenden Beispiel kann der Benutzer 100 die Höhe, in der der Ballon 3a schwebt, so wählen, dass die Seite des Hauses 10 frei von Sichthindernissen und mit optimalen Aufnahmewinkeln gescannt werden kann. Hierzu wird der Ballon 3a wie dargestellt vom Benutzer 100 mittels der Leine 2 z.B. zwischen dem Haus 10 und dem Baum 51 nah am Baum 51 auf etwa halber Haushöhe positioniert. Zusätzlich oder alternativ wird das Haus 10 von einem höheren Standort 6 aus vermessen, so dass das Hausdach 11 gescannt werden kann. Mittels der Leine 2 kann der Ballon 3a also in der gewünschten Höhe positioniert werden. Weiter wird die Scaneinheit 4 vom Benutzer 100 in einer Bewegung 52a (des Benutzers 100 selbst bzw. der sich daraus durch die Leinenführung ergebenden Bewegung 52b des Ballons 3a und der Abtasteinheit 4) mittels der Leine 2 um das Haus 10 herumgeführt, um so die gesamte Objektoberfläche 7 zu vermessen.

Das Vermessungsgerät 1 weist dabei Mittel auf zur Bestimmung einer Position und Orientierung der Abtasteinheit 4 bzw. des Fluggeräts 3a. Im Beispiel dienen die Mittel zur aktiven Bestimmung, d.h. die Position und Orientierung der Abtasteinheit 4 werden explizit so bestimmt, deren Werte als speicherbare Daten vorliegen, welche beispielsweise in einem Permanentspeicher einer Benutzereinheit 5 abgelegt werden. Bei einer fortlaufenden aktiven Bestimmung ist so der Verlauf des Standorts 6 und die Orientierung der Abtasteinheit 4 gespeichert und wird z.B. zur Verknüpfung der einzelnen Messpunkte 15 und somit bei der Erzeugung der 3D-Punktwolke herangezogen. Der Standort 6 und die Orientierung ändern sich z.B. durch die vorgenannte Bewegungen 52a und 52b, aber auch dann, wenn der Standort 6 und/oder die Ausrichtung der Abtasteinheit 4 aufgrund störender äusserer Einflüsse (Wind, unbeabsichtigte Bewegungen des Benutzers 100) bei einem Abtastvorgang nicht völlig stabil ist. Die Mittel zur Bestimmung der Position und Orientierung (roll, pitch, yaw) weisen im Beispiel trägerseitig, d.h. beim bzw. am Ballon 3a, eine Inertial Measurement Unit (IMU) und eine Kamera zur fortlaufenden Bildaufnahme auf (nicht dargestellt), wobei die Bilder der Kamera zur kamerabasierten Selbstlokalisierung dienen. Zusätzlich oder alternativ zur Kamera können die Mittel eine GNSS-Antenne aufweisen. Die Steuer- und Auswerteeinheit ist dabei ausgebildet, um mittels eines Algorithmus anhand der fortlaufend gemessenen Werte der IMU (Beschleunigungsinformation) und den Kamerabildern bzw. der Selbstlokalisierung (und/oder gegebenenfalls der GNSS-Signale) fortlaufend die Position und Orientierung der Abtasteinheit 4 bzw. des Fluggeräts 3a zu bestimmen. Der Algorithmus ist bevorzugt ein Zustandsschätzer, der z.B. auf einem Kalman-Filter basiert. Dabei wird optional ein SLAM-Algorithmus (simultaneous localization and mapping) verwendet. Im Rahmen der kamerabasierten Selbstlokalisierung erfolgt beispielsweise eine Bildauswertung hinsichtlich korrespondierender Merkmale oder homologer Bildpunkte in wenigstens zwei Bildern einer Bilderserie der Kamera. Dies erfolgt mittels Matching-Algorithmen wie SIFT, SURF, BRISK, BRIEF, etc, wodurch mehrere Objektpunkt festgelegt werden, die zur Positionsreferenzierung dienen. Dies wird für weitere Bilder in dem Fachmann bekannter Weise entsprechend fortgesetzt. Im Falle einer Videoaufnahme als Bilderserie können Korrespondenzen bzw. Homologien mittels eines Tracking-Algorithmus gefunden werden, z.B. dem Kanade-Lucas-Tomasi (KLT) feature tracker-Algorithmus. Erstellen einer Bilderserie bedeutet also das Erstellen von Bilddaten durch fortlaufendes (entsprechend einem vorgegebenen zeitlichen oder örtlichen Raster) Aufnehmen von Einzelbildern oder Videoframes. Daten von einer IMU und gegebenenfalls von einem GNSS-Empfänger werden im Beispiel dabei zusätzlich zur Bestimmung der Relativposen zwischen Bildern der Bilderserie herangezogen. Eine Verfeinerung des Resultats kann abschliessend optional z.B. durch bundleadjustment erzielt werden.

Alternativ oder zusätzlich weist die Scaneinheit 4 eine zusätzliche Zielkamera auf, mit der die Ausrichtung bzw.

Zielrichtung der Scaneinheit 4 mittels Bildübertragung durch das Kabel 2 auf das Display der Benutzereinheit 5 live einstellbar bzw. überprüfbar ist. Alternativ zu einer als Datenkabel ausgebildeten Leine 2 weisen die Scaneinheit 4 und die Benutzereinheit 5 Module zur drahtlosen Datenübertragung auf, z.B. WiFi- oder Bluetoothmodule. Zusätzlich oder alternativ ist die Steuer- und Auswerteeinheit vollständig oder teilweise in der Abtasteinheit 4 untergebracht.

Die Leine 2 ist elektrisch leitfähig, d.h. als Kabel ausgebildet, das elektrische Ströme bzw. Signale transportieren kann und im Beispiel an der Abtasteinheit 4 angeschlossen ist. Benutzerseitig ist das Kabel 2 mit der Benutzereinheit 5 verbunden, welche als Teil des Vermessungsgeräts 1 eine Steuer- und Auswerteeinheit aufweist, die ausgebildet ist zur Durchführung der Oberflächenvermessungsfunktionalität. Die dargestellte Ausführungsform bietet den Vorteil, dass vom Benutzer 100 über die Benutzereinheit 5, z.B. ein tragbarer Computer oder Feldrechner, Steuerbefehle an die Scaneinheit 4 übermittelbar sind. Weiter sind umgekehrt Daten, vor allem bereits aufgenommene 3D-Punktkoordinaten bzw. deren Rohdaten, von der Scaneinheit 4 zur Benutzereinheit 5 übermittelbar. Diese Daten werden von einem Datenspeicher der Benutzereinheit 5 gespeichert.

Zudem ist die Steuer- und Auswerteeinheit vorteilhaft derart konfiguriert, dass die Daten noch während der Messung ("on the fly") zumindest teilweise ausgewertet werden, so dass dem Benutzer 100 z.B. noch während des Messvorgangs zumindest eine grobe, vorläufige oder noch nicht vollständige 3D-Punktwolke auf einem Display der Benutzereinheit 5 dargestellt werden kann. Somit ist der Vermessungsvorgang in Echtzeit durch den Benutzer 100 überwachbar und ggf. korrigierbar. Zudem kann noch vor Ort eine Bewertung des Messergebnisses erfolgen und z.B. ein oder mehrere zusätzliche Scans, also ein Zweitabtasten, von besonders interessanten Bereichen (regions of interest ROI) der Oberfläche 7 durchgeführt werden. Beispiele für ROIs sind unabgetastete Bereiche bzw. solche mit Abtastlücken, z.B. aufgrund eines Scanschattens, Bereiche mit auffällig abweichenden oder offenkundig fehlerhaften Messdaten, oder Bereiche, die mit einer für die Struktur relativ geringen Auflösung aufgenommen sind (z.B. sind relativ hohe Punktdichten für Formen mit vielen Ecken und Kanten wünschenswert, wohingegen eine ebene Oberfläche auch durch geringe Punktdichten ausreichend abgetastet ist). Bei genannten Ausführungsformen mit einer optischen Zielkamera sind optional ROIs auch vorab oder anschliessend an das erstmalige Scannen anhand eines Zielkamerabildes vom Benutzer 100 auswählbar. Hierbei können das Zielkamerabild und die 3D-Punktwolke auch gemeinsam, z.B. überlagernd, auf dem Display angezeigt werden.

Figur 2b zeigt beispielhaft die resultierende Punktwolke 16, welche anhand der gemessenen 3D-Koordinaten erzeugt ist. Die Punktwolke 16 repräsentiert dabei die Oberfläche 7 des Hauses 10 und stellt damit eine Abbildung bzw. ein Modell eines Teils des Hauses 10 dar, wie sie z.B. auf einem Display der Benutzereinheit 5 dem Benutzer 100 dargestellt werden kann. Durch die vorliegende Erfindung ist vorteilhaft die Oberfläche 7, also die eine Seite des Hauses 10, ohne Scanschatten vollständig erfasst, so dass auch die erzeugte Punktwolke 16 die gesamte Oberfläche 7 repräsentiert. Im Beispiel enthält die Darstellung eine Markierung eines besonders relevanten Bereichs (ROI) 17, welcher im Rahmen einer fortgebildeten Oberflächenvermessungsfunktionalität von der Steuer- und Auswerteeinheit automatisch ermittelt oder aber manuell vom Benutzer in der Punktwolkengrafik markiert worden ist. Im Beispiel zeigt die Markierung z.B. einen Bereich 17 an, der auf eine schadhafte Stelle der Hauswand hindeutet, welche z.B. durch eine unebene Oberfläche bzw. eine vom Rest bzw. der Umgebung abweichende Verteilung der entsprechenden 3D-Punkte erkannt worden ist. Optional erfolgt dann ein Zweitabtasten dieses ROI mit dem Oberflächenvermessungsgerät 1, z.B. mit einer im Vergleich zum vorherigen Abtasten erhöhten Auflösung. Das Zweitabtasten erfolgt dabei, indem der Ballon 3a bzw. die Abtasteinheit 4 vom Benutzer 100 mittels der Leine 2 in der entsprechenden Höhe und entsprechenden Lage positioniert wird. In Ausführungsformen mit motorisierten Fluggeräten 3b, 3c (siehe nachfolgende Figuren) kann eine solche Feinpositionierung auch automatisch durch die Steuer- und Auswerteeinheit in Abhängigkeit des erkannten ROIs 17 erfolgen, so dass also das Fluggerät 3b, 3c im Rahmen der vorgegebenen Positionierung sich selbstständig zum geeigneten Aufnahmestandort begibt bzw. die Abtasteinheit 4 selbstständig auf den ROI 17 ausgerichtet wird. Möglich ist dabei auch, dass für genau diesen Zweck einer Zweitvermessung eines oder mehrerer ROI 17 die Positionsvorgabe durch die Leine vollständig aufgegeben wird, so dass das Fluggerät 3b, 3c zeitweilig freibeweglich ist. Dies böte vor allem dann Vorteile, wenn die Zweitabtastung bzw. erneute detaillierte Abtastung eines ROI 17 bei einer Positionsvorgabe durch die Leine 2 nicht möglich wäre, weil ein geeigneter oder vielmehr notwendiger Abtaststandort 6 bei Anbindung an die Leine 2 nicht eingenommen werden kann.

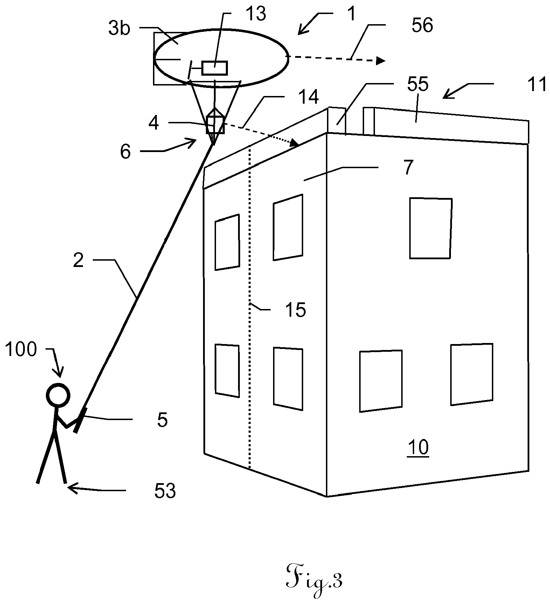

Figur 3 zeigt eine weitere Ausführungsform eines erfindungsgemässen Vermessungsgerät 1 mit einer Oberflächenvermessungsfunktionalität. Im Unterschied zur vorherigen Ausführungsform ist das unbemannte schwebefähige Fluggerät ausgebildet als Zeppelin 3b, verfügt also über Antriebsmittel 13 (Motorgondel), die eine selbstständige Fortbewegung zumindest in horizontaler Richtung ermöglichen. Der Bewegungsradius bzw. Bewegungsspielraum ist dabei durch die Leine 2 begrenzt, so dass die Position bzw. Bewegung des Luftschiffs 3b bzw. der Standort 6 der Scaneinheit 4 im Wesentlichen vom Benutzer 100 mittels der Leine 2 vorgegeben wird. Die Steuerung der Flugrichtung 56 des Zeppelins 3b erfolgt dabei ferngesteuert durch den Benutzer 100 mittels der Benutzereinheit 5, wobei die Steuersignale über die als Strom- bzw. Signalkabel ausgebildete Leine 2 an den Zeppelin 3b geleitet werden. Die Steuerung erfolgt dabei z.B. mittels Bedienelementen (Steuerhebel, -knöpfe etc.), welche die Bedieneinheit 5 aufweist oder durch Bewegungen (Kippen, Drehen, Seitwärtsbewegungen etc.) der Bedieneinheit 5 selbst. Dabei erfolgt optional in diesem Zusammenhang auch eine Steuerung durch Bewegungen der Bedieneinheit 5 oder erfindungsgemäß einfach der Hand des Benutzers 100, welche mittels einer Kamera des Fluggeräts 3b erkannt werden, so dass die Leine 2 nicht zur Übertragung von Steuersignalen dienen muss. Alternativ ist eine solche Kamera zum Aufnehmen von Bewegungen des Bedieneinheit 5 oder des Benutzers 100 (bzw. von Gesten des Benutzers 100) an der Leine 2 angebracht. Alternativ oder zusätzlich erfolgt die (wegen der Leine 2 nur begrenzt mögliche) Eigenbewegung der Zeppelins 3b (semi-)autonom gemäss einer zuvor vom Benutzer 100 oder in der Steuer- und Auswerteeinheit festgelegten Flugroutine (z.B. Fahren eines Kreises oder einer 90°-Drehung) und/oder anhand von Steuersignalen, die anhand von Sensoren (besonders Abstandssensoren) des Zeppelins 3b ausgegeben werden.

Die Verwendung eines Fluggeräts mit eigenem Antrieb und/oder Steuermitteln wie z.B. Ruder verbessert bzw. vereinfacht die Wahl des Vermessungsstandorts 6 der Vermessungseinheit 4, indem z.B. von einem einzigen Standort 53 des Benutzers 100 aus nicht nur mehrere ähnliche bzw. nah beieinander liegende Standorte 6 in vertikaler Richtung möglich sind (durch Veränderung der Länge der Leine 2), sondern durch die Eigenbewegung des Zeppelins 3b zusätzlich auch mehrere Standorte 6 in horizontaler Richtung. Dabei ist die Steuerung des Fluggeräts 3b für den Benutzer 100 immer noch vergleichsweise einfach. Zudem sind Vermessungsstandorte 6 ermöglicht, die mit einem rein passiven Fluggerät wie einem Ballon nicht erreichbar sind. Im Beispiel weist das Haus 10 auf dem Dach Aufbauten 55 auf, durch welche der vordere Bereich des Dachs 11 von einem Standpunkt 6 vor dem Haus betrachtet abgeschattet wird, so dass bei Verwendung eines Ballons als Trägereinheit ein "Scanschatten" vorliegt. Mit dem Luftschiff 3b ist es hingegen möglich, ein Stück weit den Vermessungsstandort 6 der Flugrichtung 56 nach in den Dachbereich hineinzuverlagern, so dass auch der vom Benutzer bzw. vorderseitig aus gesehen unmittelbar hinter dem Aufbau 55 liegende Dachbereich vermessbar ist (Pfeil 14).

Die Antriebs- bzw. aktiven Steuerelemente des Zeppelins 3b ermöglichen zudem ggf. eine verbesserte Stabilität der Raumlage, so dass unbeabsichtigte und störende Veränderungen des Standorts 6 verringert bzw. verhindert werden können. Hierzu ermöglichen die Mittel zur Bestimmung einer Position und Orientierung der Abtasteinheit 4 bevorzugt eine fortlaufende passive Bestimmung, d.h. es werden z.B. Abweichungen bzw. Änderungen von Position und Orientierung gemessen und anhand dieser Messwerte Steuersignale an die Antriebs- bzw. Steuerelemente ausgegeben, so dass die Abweichungen kompensiert werden und damit eine Flugstabilisierung erreicht wird. Hierzu ist eine dauerhafte Speicherung bzw. Ablage der Positions- bzw. Orientierungswerte nicht notwendig, so dass die Werte direkt nach Verwendung fallengelassen oder überschrieben werden können.

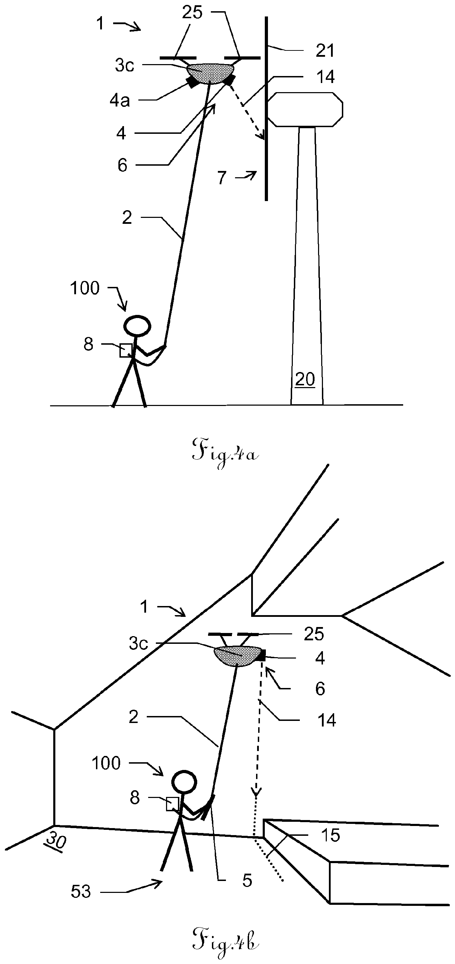

Figur 4a zeigt in einer Seitenansicht ein erfindungsgemässes Oberflächenvermessungsgerät 1 zum 3D-Vermessen von Objektoberflächen 7, bei dem das Fluggerät als schwebefähige Drone bzw. Copter 3c ausgebildet ist mit mindestens zwei, vorzugsweise vier, Rotoren 25, die eine fliegende und schwebende Bewegung des Fluggeräts 3c ermöglichen. Eine mögliche Alternative zu einem Copter 3c ist ein unbemannter Miniaturhelikopter. Der Copter 3c ist erfindungsgemäss an der Leine 2 befestigt und wird darüber vom Benutzer 100 geführt. Ein derartiges Fluggerät 3c stellt zwar im Vergleich zu einem Zeppelin oder gar Ballon nach den Ausführungsformen der Figuren 2a bzw. 3 je nach Ausführungsform unter Umständen höhere Anforderungen an die Steuerung bzw. Führung durch den Benutzer 100, welche jedoch als Option durch (semi-)autonome Flugfähigkeiten bzw. Steuerung des Copters 3c verminderbar sind und im Vergleich zu einem völlig frei fliegenden, ungebundenen Träger immer noch wesentlich geringer sind. Optional ist es z.B. möglich, den Copter 3c als quasi-passives Fluggerät zu betreiben, d.h. dass die Antriebsmittel rein zur Herstellung einer stabilen Schwebefähigkeit an der Leine 2 dienen (vergleichbar einem Ballon) und nicht für eine gezielte Eigenbewegung genutzt werden. Der Auftrieb durch den Antrieb ist dabei jedenfalls so eingestellt, dass die Leine 2 zumindest leicht gespannt ist oder anders formuliert der Copter 3c ohne Halten der Leine 2 durch den Benutzer höher steigen würde. Dabei kann vor allem bei fernsteuerungslosen Ausführungsformen eine Sicherheitsmechanismus vorgesehen sein, der ein (unbeabsichtigtes) Loslassen der Leine 2 erkennt und ein Absenken des Copters 3c einleitet. Alternativ wird der Antrieb bzw. die Steuerelemente für eine Bewegung des Copters 3c verwendet, die nicht unmittelbar aus der Führung durch die Leine 2 resultiert, also für eine Veränderung der Mikro- oder Feinlage im Rahmen der durch die Leine 2 vorgegebenen Makro- oder Groblage. Steuerbefehle zur Ausführung einer solchen Eigenbewegung können dabei durch den Benutzer wie zu Figur 3 beschreiben ausgegeben werden. Beispielsweise ist optional auch die Verbindung der Leine 2 mit dem Copter 3c als Steuermodul ausgebildet, so dass z.B. Steuerbefehle einfach durch Bewegungen bzw. Zustandsänderungen der Leine 2 durchführbar sind, beispielsweise indem ein ruckartiger Zug der Leine 2 in eine horizontale Richtung eine Bewegung des Fluggeräts in eben jene Richtung befiehlt. Die Zustandsänderung der Leine 2 ist dabei z.B. durch einen Kraftsensor oder optisch vom Steuermodul erfassbar. Mit anderen Worten kann durch z.B. Veränderung der Zugspannung oder Zugrichtung der Leine 2 ein Befehl an das Fluggerät 3c oder die Abstasteinheit 4 erteilt werden. Ein weiterer Vorteil gegenüber einer ungebundenen Vermessungseinrichtung 1 ist, dass das Fluggerät 3c aufgrund der geringeren Anforderungen gegenüber einem völlig freien Flugvermögen einfacher konfigurierbar und damit kostengünstiger herstellbar ist. Ein Drone bzw. Copter 3c bietet im Vergleich zum Zeppelin nach Figur 3 den Vorteil einer noch weiter gesteigerten aktiven Bewegung des Fluggeräts 3c und damit einer weiter verbesserten Anpassung des Vermessungsstandorts 6 im Rahmen der durch die Leine 2 vorgegebenen Position. Dadurch sind auch sehr verwinkelte, unregelmässige oder aufbautenreiche Objekte mit vergleichsweise wenig Aufwand bzw. überhaupt erst vollständig vermessbar.

Im Beispiel nach Figur 4a ist das Objekt, dessen Oberfläche 7 dreidimensional vermessen werden soll, eine Windenergieanlage oder Windturbine 20. Da derlei Anlagen grosse Dimensionen und aufgestellt eine grosse Höhe aufweisen (in der Figur 4a ist die Darstellung aus zeichnerischen Gründen vergleichsweise zu klein), erfordern sie bereits vor der Montage mit Vermessungsvorrichtungen des Stands der Technik einen erhöhten Aufwand und sind im voll installierten Zustand vom Boden kaum noch vermessbar. Vor allem entziehen sich nach der Installation hochrelevante Anlagenteile wie die Rotorblätter 21 nach dem Stand der Technik weitgehend einer präzisen Oberflächeninspektion. Mit der erfindungsgemässen Vermessungsvorrichtung 1 hingegen kann eine Abtasteinheit 4 gegenüber den Rotorblättern 21 positioniert werden und somit diese von einem optimalen Standort 6 aus vermessen werden, wozu die Abtasteinheit 4 vorteilhaft zum Scannen durch Ablenken des Messstrahls um zwei Achsen ausgebildet ist. Zudem ist die Scaneinheit 4 entlang dem jeweiligen Rotorblatt 21 bewegbar, so dass z.B. eine Vielzahl hochdetaillierter Einzelscans bzw. hochgenaue Einzel-3D-Punktwolken möglich sind, wobei die einzelnen Punktwolken im post-processing oder durch die Steuer- und Auswerteeinheit der Vermessungsvorrichtung 1 noch vor Ort zu einer gesamten 3D-Punktwolke verknüpft werden können. Optional weist die Steuer- und Auswerteeinheit dabei verschiedene Vermessungsmoden für unterschiedliche Oberflächen 7 bzw. Objekte 20 auf, z.B. einen Modus zur Vermessung von Windenergieanlagen 20 und einen Modus zur Vermessung von Häusern 10, wobei je nach Modus die Abtasteinheit 4 und/oder das Fluggerät 3c unterschiedlich betrieben werden, z.B. hinsichtlich Abtastmuster der Ablenkreinrichtung der Abtasteinheit 4 oder Eigenbewegung des Copters 3c.

Im Beispiel weist das erfindungsgemässe Vermessungsgerät 1 neben der messstrahlbasierten Abtasteinheit 4 eine weitere Vermessungseinheit 4a auf. Diese ist z.B. eine weitere, identische Scan- oder Profilereinheit, so dass ohne Positionsveränderung bzw. Rotation des Copters 3c von einem Standort 6 aus, insbesondere gleichzeitig, mehrere Objekte 20 bzw. unterschiedliche Oberflächen 7 eines Objekts 3D-vermessbar sind. Alternativ handelt es sich bei der weiteren Vermessungseinheit 4a um einen anderen Typ von messender Vermessungseinheit, so dass eine einzige Vermessungsvorrichtung 1 für verschiedene Messaufgaben ausgebildet ist. Diese weitere Vermessungseinheit 4a misst vorzugsweise ebenfalls berührungslos und ist z.B. als Infrarotkamera oder Wärmebildkamera ausgebildet, es kann sich aber auch um eine taktile Vermessungseinheit handeln, welche z.B. eine Leitfähigkeit der Oberfläche ermittelt. Ermöglicht ist damit auch eine Verknüpfung von 3D-Koordinaten einer Oberfläche, also der koordinativen Oberflächeninformation, welche mit der Abtasteinheit 4 gewonnen sind, mit Oberflächeninformation anderer Art zur gleichen Oberfläche, welche durch die weitere Vermessungseinheit 4a gemessen wurden.

Der Energiebedarf eines Fluggeräts, welches aufgrund einer z.B. durch die Rotation der Rotoren 25 verursachten Luftströmung schwebefähig ist, ist im Vergleich zu Fluggeräten, die aufgrund eines Dichteunterschieds Auftrieb erhalten (Ballon, Zeppelin), hoch. Deshalb ist vor allem in Ausführungsformen mit einem Copter 3c oder ähnlichen aktiven Fluggerät vorteilhaft die Leine 2 als Stromkabel ausgebildet, welches (alternativ oder zusätzlich zu einer zuvor beschriebenen Daten- bzw. Steuersignalübertragung) zur Energieversorgung des Copters 3c ausgebildet ist und an einer Energiequelle, im Beispiel eine Batterie 8, am Boden angeschlossen ist. Im Beispiel wird die Batterie 8 vom Benutzer 100 auf dem Rücken getragen. Die "Auslagerung" der Energieversorgung aus dem Copter 3c ermöglicht vorteilhaft eine deutliche Verringerung des Gewichts des Copters 3c, so dass dessen Energiebedarf deutlich sinkt. Zugleich kann die Batterie 8 und damit deren Kapazität viel grösser gewählt werden (bzw. eine kostengünstigere Batterie 8 gleicher Kapazität verwendet werden, deren Bestandteile nicht nach möglichst geringem Gewicht und/oder Volumen ausgesucht werden müssen). Insgesamt ist durch eine erheblich verlängerte maximale Flugdauer des Copters 3c und somit eine verlängerte Einsatzdauer des Vermessungsgeräts 1 erzielbar als in Ausführungsformen mit on-board-Batterien bzw. als in leinen- und damit kabellosen Vermessungsgeräten (mit Freifluggeräten) nach dem Stand der Technik.

Figur 4b zeigt die Verwendung eines erfindungsgemässen Oberflächenvermessungsgeräts 1 mit einem Copter 3c als Träger zur Vermessung eines Innenraums 30. Die effektive Länge der Leine 2, die wiederum als Stromkabel zu Verbindung einer Batterie 8 mit dem Copter 3c dient, ist in einem solchen Verwendungsfall entsprechend kürzer als im Beispiel nach Figur 4a. Das Oberflächenvermessungsgeräts 1 ist ausgebildet als Profiler, wobei die Abtasteinheit 4 so im Copter 3c angeordnet ist, dass der Laserstrahl um eine horizontale Achse abgelenkt wird. Somit lässt sich der Raum 30 im vollständigen Querschnitt abtasten und durch Ablaufen des Raums durch den Benutzer 100, also durch eine regelmässige Veränderung seines Standorts 53, eine 3D-Punktwolke erzeugen, die den gesamten Raums 30 repräsentiert, und beispielsweise direkt dem Benutzer 100 auf der Benutzereinheit 5 angezeigt wird. Unterstützend wird dabei eine Eigenbewegung des Copters 3c benutzt, z.B. eine, vorzugsweise vollständige, Rotation um die z-Achse bzw. Vertikale, oder eine Translation in der xy- bzw. Horizontalebene, wodurch beispielsweise das Ablaufen des Raums 30 vermindert oder ganz unnötig werden kann, wozu weiter oder alternativ die Abtasteinheit 4 alternativ als Scaneinheit und damit das Vermessungsgerät als Scanner 4 ausgebildet sein kann, also der Messstrahl 14 um zwei Achsen verschwenkbar bzw. ablenkbar ist.

Es versteht sich, dass diese dargestellten Figuren nur mögliche Ausführungsbeispiele schematisch darstellen. Die verschiedenen Ansätze können erfindungsgemäss ebenso miteinander sowie mit Systemen und Verfahren zum Vermessen von Oberflächen bzw. Objekten und mit Vermessungsgeräten des Stands der Technik kombiniert werden.

## Patentansprüche

1. Oberflächenvermessungsgerät (1), insbesondere Profiler oder 3D-Scanner, zur Bestimmung einer Vielzahl von 3D-Koordinaten von Messpunkten (15) einer Oberfläche (7) mit
• einer Abtasteinheit (4) zum optischen Abtasten der Oberfläche (7), wobei die Abtasteinheit (4) aufweist
o eine Sendeeinheit zur Emission optischer, kohärenter und kollimierter Messstrahlung (14), insbesondere Laserstrahlung,
o eine Ablenkeinrichtung zur abtastenden Führung der Messstrahlung (14) über die Oberfläche (7) in wenigstens eine Ablenkrichtung,
o Mittel zum Erfassen der jeweiligen relativen Ablenkrichtung, und
o einem Detektor zur Detektion der von einem jeweiligen Messpunkt (15) reflektierten Messstrahlung (14),
• Mitteln zur Bestimmung einer Position und Orientierung der Abtasteinheit (4),
• einem Träger zum Tragen der Abtasteinheit (4) und wenigstens einem Teil der Mittel zur Bestimmung einer Position und Orientierung,
• einer Steuer- und Auswerteeinheit mit einer Oberflächenvermessungsfunktionalität zur Steuerung der Abtasteinheit (4) und zur Bestimmung der 3D-Koordinaten der Messpunkte (15) anhand der jeweiligen Ablenkrichtung und eines mittels detektierter Messstrahlung (14) abgeleiteten Distanzwerts,
wobei der Träger ausgebildet ist als schwebefähiges unbemanntes Fluggerät (3a-3c) mit einer Leine (2), welche an ihrem einen Ende mit dem Fluggerät (3a-3c) verbunden ist und am anderen Ende von einem Benutzer (100) haltbar ist, wobei
• die Leine (2) vorgesehen ist zur Führung des Fluggeräts (3a-3c) in der Luft durch den Benutzer (100) und
• durch die, insbesondere durch den Benutzer (100) veränderbare, effektive Länge der Leine (2) die Positionierung des Fluggeräts (3a-3c) in der Luft vorgegeben ist, und
• die Leine (2) elektrisch leitfähig ist und zur
o Energieversorgung und/oder
o Steuer- und/oder Datensignalübertragung an und/oder von sich in der Luft befindlichen Teilen des Oberflächenvermessungsgeräts (1) dient, insbesondere des Fluggeräts (3a-3c) und/oder der Abtasteinheit (4),
**dadurch gekennzeichnet, dass**
die Steuer- und Auswerteeinheit eine Gestensteuerungsfunktionalität aufweist, so dass anhand aufgenommener Bewegungsbilder von Handbewegungen des Benutzers (100) Steuerbefehle an das Fluggerät (3b, 3c) und die Abtasteinheit (4) ausgegeben werden, insbesondere wobei zur Aufnahme der Bewegungsbilder der Träger eine Kamera aufweist.

2. Oberflächenvermessungsgerät (1) nach Anspruch 1,
**dadurch gekennzeichnet, dass**
die Mittel zur Bestimmung der Position und Orientierung ausgebildet sind zur
• aktiven Bestimmung der Position und Orientierung zum Erhalt von Positions- und Orientierungswerten als speicherbare Daten und/oder
• fortlaufenden passiven Bestimmung der Position und Orientierung zur Flugstabilisierung des Fluggeräts (3a-3c) .

3. Oberflächenvermessungsgerät (1) nach einem der vorherigen Ansprüche,
**dadurch gekennzeichnet, dass**
die Mittel zur Bestimmung der Position und Orientierung trägerseitig aufweisen
• Sensoren zur fortlaufenden Messung einer Beschleunigung und/oder Drehrate und/oder magnetischen Ausrichtung, im Speziellen eine Inertial Measurement Unit (IMU), und
• wenigstens eine Kamera zur fortlaufenden Bildaufnahme einer Bilderserie im Rahmen einer kamerabasierten Selbstlokalisierung und/oder
• Empfänger zum fortlaufenden Empfang von Positionsreferenzsignalen, insbesondere GNSS-Signalen und/oder Pseudolit-Signalen,
und die Steuer- und Auswerteeinheit ausgebildet ist zur Ausführung eines Algorithmus, insbesondere eines Zustands-Schätz-Algorithmus, im Speziellen basierend auf einem Kalman-Filter, zur fortlaufenden Berechnung, insbesondere in Echtzeit, der Position und Orientierung anhand der fortlaufend ermittelten Daten der Sensoren und der Kamera und/oder Empfänger.

4. Oberflächenvermessungsgerät (1) nach Anspruch 3,
**dadurch gekennzeichnet, dass**
bei Vorliegen einer Kamera zur fortlaufenden Bildaufnahme im Rahmen der kamerabasierten Selbstlokalisierung der Algorithmus ausgebildet ist, insbesondere durch Aufweisen von Structure-from-Motion-(SfM) oder SLAM-Algorithmen, zur Bestimmung von Position und Orientierung von Bildern der Bilderserie basierend auf Rückwärtsschnitt mit Hilfe von Oberflächenpunkten, die in mindestens zwei Bildern der Bilderserie erfasst sind, insbesondere wobei die Oberflächenpunkte zum Rückwärtsschnitt mittels feature-extraction-Algorithmen und/oder tracking-Algorithmen ausgewählt werden.

5. Oberflächenvermessungsgerät (1) nach einem der vorherigen Ansprüche,
**dadurch gekennzeichnet, dass**
• das Oberflächenvermessungsgerät (1), insbesondere die Leine (2), eine drahtgebundene oder drahtlose Schnittstelle zum Anschluss einer externen Benutzereinheit (5), insbesondere eines Smartphones oder Tablets, aufweist und/oder
• mittels der Leine (2) auch die Ausrichtung des Fluggeräts (3a-3c) durch den Benutzer (100) vorgebbar ist.

6. Oberflächenvermessungsgerät (1) nach einem der vorherigen Ansprüche,
**dadurch gekennzeichnet, dass**
Rohdaten und/oder 3D-Koordinaten von vermessenen Messpunkten (15), insbesondere mittels Datensignalübertragung durch die Leine (2), an eine Benutzereinheit (5), übertragbar sind, insbesondere dergestalt, dass noch während einer Oberflächenvermessung basierend auf den 3D-Koordinaten eine 3D-Punktwolke (16) erzeugbar und graphisch auf der Benutzereinheit (5) darstellbar ist.

7. Oberflächenvermessungsgerät (1) nach einem der Ansprüche 1 bis 6,
**dadurch gekennzeichnet, dass**
das Fluggerät (3b, 3c) wenigstens ein Antriebsmittel und/oder Steuerungsmittel (13, 25) zur aktiven Anpassung der durch die effektive Länge der Leine (2) vorgegebenen Position und/oder Ausrichtung aufweist, insbesondere zur optimierten Ausrichtung der Abtasteinheit (4) auf die zu vermessende Oberfläche (7), insbesondere wobei das Fluggerät (3b, 3c) ausgebildet ist als Zeppelin (3b) oder Copter (3c).

8. Oberflächenvermessungsgerät (1) nach Anspruch 7,
**dadurch gekennzeichnet, dass**
die aktive Anpassung der Position und/oder Ausrichtung erfolgt anhand von
• Steuerbefehlen des Benutzers (100), insbesondere wobei die Steuerbefehle mittels einer Benutzereinheit (5), im Speziellen einem Smartphone oder einem Tablet und/oder per Multi-Touch und/oder per Bewegung der Benutzereinheit (5), erteilt werden, und/oder
• von in der Steuer- und Auswerteeinheit einprogrammierten Routinen zur semiautonomen Eigenbewegung des Fluggeräts (3b, 3c) und/oder
• Steuerbefehlen der Steuer- und Auswerteeinheit, welche auf aktuellen Messwerten, insbesondere Beschleunigungs- und/oder Distanzwerten, von Sensoren des Fluggeräts (3b, 3c) basieren.

9. Oberflächenvermessungsgerät (1) nach einem der vorherigen Ansprüche,
**dadurch gekennzeichnet, dass**
• die Verbindung der Leine (2) mit dem Fluggerät (3b, 3c) als Steuermodul ausgebildet ist, so dass durch eine vom Benutzer (100) kontrollierte Veränderung eines Zustands der Leine (2), insbesondere der anliegenden Zugspannung und/oder Zugrichtung, ein Steuerbefehl vom Benutzer (100) an das Fluggerät (3b, 3c), insbesondere zur aktiven Veränderung der Position und/oder Ausrichtung, und/oder Abtasteinheit (4), insbesondere zum Start und/oder Beenden eines Abtastvorgangs, ausgebbar ist, und/oder
• das Oberflächenvermessungsgerät (1) neben der Abtasteinheit (4) eine weitere Oberflächenmesseinheit (4a) aufweist, insbesondere eine Infrarotkamera und/oder Wärmebildkamera, insbesondere wobei im Rahmen der Oberflächenvermessungsfunktionalität ein Verknüpfen von 3D-Koordinaten, insbesondere der daraus erzeugten 3D-Punktwolke, mit Messdaten der weiteren Oberflächenmesseinheit (4a) erfolgt, und/oder
• das Fluggerät (3b, 3c) eine Reserveenergiequelle aufweist.

10. Verfahren zum Bestimmen einer Vielzahl von 3D-Koordinaten von Messpunkten (15) einer Oberfläche (7) mit einem Oberflächenvermessungsgerät (1) nach Anspruch 1 mit
• einem, insbesondere punktweisen, räumlich versetzbaren, optischen Abtasten der Messpunkte (15) der Oberfläche (7) mittels optischer, kohärenter und kollimierter Messstrahlung (15) definierter Ablenkrichtung, insbesondere Laserstrahlung,
• Ableiten von Distanzwerten anhand detektierter reflektierter Messstrahlung (15),
• Bestimmen von 3D-Koordinaten anhand der Distanzwerte und Ablenkrichtungen.

11. Verfahren nach Anspruch 10,
**dadurch gekennzeichnet, dass**
anhand wenigstens eines Teils der 3D-Koordinaten noch während des Abtastens eine 3D-Punktwolke (16) erzeugt wird, insbesondere wobei
• eine graphische Darstellung der 3D-Punktwolke (16) auf einem Display ausgegeben wird und/oder,
• ein automatisches Erkennen besonders relevanter Bereiche (regions of interest, ROI) (17) der 3D-Punktwolke (16) erfolgt, wobei im Speziellen
□ eine graphische Darstellung des oder der besonders relevanten Bereiche (17) auf einem Display erfolgt und/oder
□ ein automatisches Zweitabtasten des oder der besonders relevanter Bereiche (17) mit dem Oberflächenvermessungsgerät (1) erfolgt.

12. Verwendung eines unbemannten, schwebefähigen Fluggeräts (3a-3c) mit einer Leine (2), welche vorgesehen ist zur Führung des Fluggeräts (3a-3c) in der Luft durch einen Benutzer (100), wobei durch die effektive Länge der Leine (2) die Position des Fluggeräts (3a-3c) in der Luft vorgegeben ist, zum Tragen der Abtasteinheit (4) eines Oberflächenvermessungsgeräts nach Anspruch 1.

13. Computerprogrammprodukt, das auf einem maschinenlesbaren Träger gespeichert ist, oder Computer-Daten-Signal, verkörpert durch eine elektromagnetische Welle, mit Programmcode zur Durchführung des Verfahrens nach einem der Ansprüche 10 und 11, wenn das Programm in einer Steuer- und Auswerteeinheit eines Oberflächenvermessungsgeräts (1) nach Anspruch 1 und/oder einer daran angeschlossenen externen Benutzereinheit (5) ausgeführt wird.

## Claims

1. Surface surveying device (1), in particular profiler or 3D scanner, for determining a multiplicity of 3D coordinates of measurement points (15) on a surface (7), comprising
• a scanning unit (4) for optically scanning the surface (7), said scanning unit (4) comprising
o a transmission unit for emitting optical, coherent and collimated measurement radiation (14), in particular laser radiation,
o a deflection apparatus for scanning guidance of the measurement radiation (14) over the surface (7) in at least one deflection direction,
o means for registering the relative deflection direction in each case, and
o a detector for detecting the measurement radiation (14) reflected by a respective measurement point (15),
• means for determining a position and orientation of the scanning unit (4),
• a carrier for carrying the scanning unit (4) and at least part of the means for determining a position and orientation,
• a control and evaluation unit with a surface surveying functionality for controlling the scanning unit (4) and for determining the 3D coordinates of the measurement points (15) on the basis of the respective deflection direction and a distance value derived by means of detected measurement radiation (14),
whereby
the carrier is embodied as an unmanned aerial vehicle (3a-3c) which is capable of hovering and comprises a lead (2), the latter being connected at one end thereof to the aerial vehicle (3a-3c) and being able to be held at the other end by a user (100), wherein
• the lead (2) is provided for guiding the aerial vehicle (3a-3c) in the air by the user (100) and
• the position of the aerial vehicle (3a-3c) in the air is predetermined by the effective length of the lead (2), said length, in particular, being changeable by the user (100), and
• the lead (2) is electrically conductive and serves for
∘ energy supply and/or
o control and/or data signal transmission to and/or from parts of the surface surveying device (1) situated in the air, in particular of the aerial vehicle (3a-3c) and/or of the scanning unit (4),
**characterized in that**
the control and evaluation unit has a gesture control functionality such that control commands are output to the aerial vehicle (3b, 3c) and/or the scanning unit (4) on the basis of recorded movement images of hand movements of the user (100), in particular wherein the carrier has a camera for recording the movement images.

2. Surface surveying device (1) according to Claim 1,
**characterized in that**
the means for determining the position and orientation are embodied to
• actively determine the position and orientation for the purposes of obtaining position and orientation values as storable data and/or
• continuously passively determine the position and orientation for stabilizing the flight of the aerial vehicle (3a-3c).

3. Surface surveying device (1) according to Claim 1 or 2,
**characterized in that**
the means for determining the position and orientation have, on the carrier side,
• sensors for continuously measuring an acceleration and/or rate of rotation and/or magnetic alignment, specifically an inertial measurement unit (IMU), and
• at least one camera for continuously recording images of an image series within the scope of a camera-based independent localization and/or
• receivers for continuously receiving position reference signals, in particular GNSS signals and/or pseudolite signals,
and the control and evaluation unit is embodied for carrying out an algorithm, in particular a state estimation algorithm, specifically on the basis of a Kalman filter, for continuously calculating the position and orientation, in particular in real time, on the basis of the continuously established data from the sensors and the camera and/or receivers.

4. Surface surveying device (1) according to Claim 3,
**characterized in that**,
if the camera is present for continuously recording images within the scope of the camera-based independent localization, the algorithm is embodied, in particular by having structure-from-motion (SfM) or SLAM algorithms, to determine position and orientation of images in the image series on the basis of resection with the aid of surface points which are registered in at least two images of the image series, in particular wherein the surface points are selected for resection by means of feature-extraction algorithms and/or tracking algorithms.

5. Surface surveying device (1) according to any one of the preceding claims,
**characterized in that**
• the surface surveying device (1), in particular the lead (2), has a wired or wireless interface for connecting an external user unit (5), in particular a smartphone or tablet, and/or
• the alignment of the aerial vehicle (3a-3c) is also predeterminable by the user (100) by means of the lead (2) .

6. Surface surveying device (1) according to any one of the preceding claims,
**characterized in that**
raw data and/or 3D coordinates of surveyed measurement points (15) are transferable to a user unit (5), in particular by means of a data signal transfer through the lead (2), in particular in such a way that, on the basis of the 3D coordinates, a 3D point cloud (16) is generable and graphically displayable on the user unit (5) still during surface surveying.

7. Surface surveying device (1) according to any one of Claims 1 to 6,
**characterized in that**
the aerial vehicle (3b, 3c) has at least one drive means and/or control means (13, 25) for actively adapting the position and/or alignment which is predetermined by the effective length of the lead (2), in particular for optimized alignment of the scanning unit (4) onto the surface (7) to be surveyed, in particular wherein the aerial vehicle (3b, 3c) is embodied as an aerostat (3b) or multicopter (3c).

8. Surface surveying device (1) according to Claim 7,
**characterized in that**
the active adaptation of the position and/or alignment is carried out on the basis of
• control commands of the user (100), in particular wherein the control commands are issued by means of a user unit (5), specifically a smartphone or tablet and/or by multi-touch and/or by movement of the user unit (5), and/or
• of routines for semiautonomous inherent movement of the aerial vehicle (3b, 3c) programmed into the control and evaluation unit and/or
• control commands of the control and evaluation unit which are based on current measurement values, in particular acceleration and/or distance values, from the sensors of the aerial vehicle (3b, 3c).

9. Surface surveying device (1) according to any one of the preceding claims
**characterized in that**
• the connection of the lead (2) to the aerial vehicle (3b, 3c) is embodied as a control module such that a control command is able to be issued by the user (100) to the aerial vehicle (3b, 3c), in particular for actively changing the position and/or alignment, and/or scanning unit (4), in particular for starting and/or completing a scanning process, by a change in a state of the lead (2) which is controlled by the user (100), in particular a change in the applied tension and/or direction of tension, and/or
• the surface surveying device (1) has a further surface measuring unit (4a), in particular an infrared camera and/or thermal imaging camera, in addition to the scanning unit (4), in particular wherein there is linking of 3D coordinates, in particular the 3D point cloud generated therefrom, with the measurement data from the further surface measuring unit (4a) within the scope of the surface surveying functionality, and/or
• the aerial vehicle (3b, 3c) has a reserve energy source.

10. Method for determining a multiplicity of 3D coordinates of measurement points (15) of a surface (7) using a surface surveying device (1) according to Claim 1, comprising
• in particular point-by-point, spatially displaceable, optical scanning of the measurement points (15) of the surface (7) by means of optical, coherent and collimated measurement radiation (15) with a defined deflection direction, in particular laser radiation,
• deriving distance values on the basis of detected reflected measurement radiation (15),
• determining 3D coordinates on the basis of the distance values and deflection directions.

11. Method according to Claim 10,
**characterized in that**
a 3D point cloud (16) is generated on the basis of at least some of the 3D coordinates still during the scanning, in particular wherein
• a graphical display of the 3D point cloud (16) is output on a display and/or
• there is an automatic identification of particularly relevant regions (regions of interest, ROI) (17) of the 3D point cloud (16), wherein, specifically,
□ there is a graphical display of the particularly relevant region or regions (17) on a display and/or
□ there is automatic second scanning of the particularly relevant region or regions (17) using the surface surveying device (1).

12. Use of an unmanned aerial vehicle (3a-3c) which is capable of hovering and comprises a lead (2) which is provided for guiding the aerial vehicle (3a-3c) in the air by a user (100), wherein the position of the aerial vehicle (3a-3c) in the air is predetermined by the effective length of the lead (2), for carrying a scanning unit (4) according to Claim 1.

13. Computer program product, stored on a machine readable medium, or computer data signal, embodied by an electromagnetic wave, comprising program code for carrying out the method according to either of Claims 10 and 11, if the program is executed in a control and evaluation unit of a surface surveying device (1) according to Claim 1 and/or in an external user unit (5) connected thereto.

## Revendications

1. Appareil de mesure de surface (1), en particulier profileur ou scanner 3D, pour la détermination d'une pluralité de coordonnées 3D de points de mesure (15) d'une surface (7), comprenant
• une unité de balayage (4) pour le balayage optique de la surface (7), l'unité de balayage (4) présentant
o une unité d'émission pour l'émission d'un rayonnement de mesure optique cohérent et collimaté (14), en particulier d'un rayonnement laser,
o un dispositif de déviation pour le guidage en balayage du rayonnement de mesure (14) sur la surface (7) dans au moins une direction de déviation,
o des moyens pour acquérir la direction de déviation relative respective, et
o un détecteur pour détecter le rayonnement de mesure (14) réfléchi par un point de mesure respectif (15),
• des moyens pour déterminer une position et une orientation de l'unité de balayage (4),
• un support pour porter l'unité de balayage (4) et au moins une partie des moyens pour déterminer une position et une orientation,
• une unité de commande et d'évaluation avec une fonctionnalité de mesure de surface pour commander l'unité de balayage (4) et pour déterminer les coordonnées 3D des points de mesure (15) à l'aide de la direction de déviation respective et d'une valeur de distance dérivée au moyen du rayonnement de mesure détecté (14),
dans lequel le support est réalisé sous la forme d'un engin volant sans pilote (3a-3c) capable de vol stationnaire, comportant un filin (2) qui est relié à l'une de ses extrémités à l'engin volant (3a-3c) et qui peut être tenu à l'autre extrémité par un utilisateur (100), dans lequel
• le filin (2) est prévu pour le guidage de l'engin volant (3a-3c) dans l'air par l'utilisateur (100) et
• le positionnement de l'engin volant (3a-3c) dans l'air est prescrit par la longueur effective du filin (2), modifiable en particulier par l'utilisateur (100), et
• le filin (2) est électriquement conducteur et sert à
o l'alimentation en énergie et/ou
o la transmission de signaux de commande et/ou de données vers et/ou depuis des parties de l'appareil de mesure de surface (1) se trouvant dans l'air, en particulier de l'engin volant (3a-3c) et/ou de l'unité de balayage (4),
**caractérisé en ce que**
l'unité de commande et d'évaluation présente une fonctionnalité de commande par gestes, de sorte qu'à l'aide d'images de mouvement enregistrées de mouvements de la main de l'utilisateur (100), des instructions de commande sont transmises à l'engin volant (3b, 3c) et à l'unité de balayage (4), en particulier dans lequel le support présente une caméra pour enregistrer les images de mouvement.

2. Appareil de mesure de surface (1) selon la revendication 1,
**caractérisé en ce que**
les moyens pour déterminer la position et l'orientation sont conçus pour
• déterminer activement la position et l'orientation pour obtenir des valeurs de position et d'orientation sous la forme de données mémorisables et/ou
• déterminer passivement en continu la position et l'orientation pour la stabilisation en vol de l'engin volant (3a-3c).

3. Appareil de mesure de surface (1) selon l'une des revendications précédentes,
**caractérisé en ce que**
les moyens pour déterminer la position et l'orientation présentent, du côté du support,
• des capteurs pour mesurer en continu une accélération et/ou une vitesse de rotation et/ou une orientation magnétique, en particulier une unité de mesure inertielle (IMU), et
• au moins une caméra pour enregistrer en continu une série d'images dans le cadre d'une autolocalisation basée sur caméra et/ou
• des récepteurs pour recevoir en continu des signaux de référence de position, en particulier des signaux GNSS et/ou des signaux de pseudolites,
et l'unité de commande et d'évaluation est conçue pour exécuter un algorithme, en particulier un algorithme d'estimation d'état, basé en particulier sur un filtre de Kalman, pour calculer en continu, en particulier en temps réel, la position et l'orientation à l'aide des données déterminées en continu des capteurs et de la caméra et/ou des récepteurs.

4. Appareil de mesure de surface (1) selon la revendication 3,
**caractérisé en ce que**,
en cas de présence d'une caméra pour l'enregistrement d'images en continu dans le cadre de l'autolocalisation basée sur caméra, l'algorithme est conçu, en particulier en présentant des algorithmes Structure-from-Motion (SfM) ou SLAM, pour déterminer la position et l'orientation d'images de la série d'images sur la base d'un relèvement à l'aide de points de surface qui sont acquis dans au moins deux images de la série d'images, en particulier dans lequel les points de surface pour le relèvement sont sélectionnés au moyen d'algorithmes d'extraction de caractéristiques et/ou d'algorithmes de suivi.

5. Appareil de mesure de surface (1) selon l'une des revendications précédentes,
**caractérisé en ce que**
• l'appareil de mesure de surface (1), en particulier le filin (2), présente une interface filaire ou sans fil pour le raccordement d'une unité d'utilisateur externe (5), en particulier d'un smartphone ou d'une tablette, et/ou
• au moyen du filin (2), l'orientation de l'engin volant (3a-3c) peut également être prescrite par l'utilisateur (100).

6. Appareil de mesure de surface (1) selon l'une des revendications précédentes,
**caractérisé en ce que**
des données brutes et/ou des coordonnées 3D de points de mesure (15) mesurés peuvent être transmises à une unité d'utilisateur (5), en particulier au moyen d'une transmission de signaux de données par le filin (2), en particulier de telle sorte qu'un nuage de points 3D (16) puisse être généré et représenté graphiquement sur l'unité d'utilisateur (5) pendant une mesure de surface sur la base des coordonnées 3D.

7. Appareil de mesure de surface (1) selon l'une des revendications 1 à 6, **caractérisé en ce que**
l'engin volant (3b, 3c) présente au moins un moyen d'entraînement et/ou un moyen de commande (13, 25) pour l'adaptation active de la position et/ou de l'orientation prescrites par la longueur effective du filin (2), en particulier pour l'orientation optimisée de l'unité de balayage (4) sur la surface à mesurer (7), en particulier dans lequel l'engin volant (3b, 3c) est réalisé sous la forme d'un dirigeable (3b) ou d'un drone (3c).

8. Appareil de mesure de surface (1) selon la revendication 7,
**caractérisé en ce que**
l'adaptation active de la position et/ou de l'orientation s'effectue à l'aide
• d'instructions de commande de l'utilisateur (100), en particulier dans lequel les instructions de commande sont transmises au moyen d'une unité d'utilisateur (5), en particulier d'un smartphone ou d'une tablette et/ou par multi-touch et/ou par mouvement de l'unité d'utilisateur (5), et/ou
• de routines programmées dans l'unité de commande et d'évaluation pour le mouvement propre semi-autonome de l'engin volant (3b, 3c) et/ou
• d'instructions de commande de l'unité de commande et d'évaluation qui sont basées sur des valeurs de mesure actuelles, en particulier des valeurs d'accélération et/ou de distance, de capteurs de l'engin volant (3b, 3c).

9. Appareil de mesure de surface (1) selon l'une des revendications précédentes,
**caractérisé en ce que**
• la liaison du filin (2) avec l'engin volant (3b, 3c) est réalisée sous la forme d'un module de commande, de sorte que par une modification contrôlée par l'utilisateur (100) d'un état du filin (2), en particulier de l'effort de traction appliqué et/ou de la direction de traction, une instruction de commande est transmise par l'utilisateur (100) à l'engin volant (3b, 3c), en particulier pour la modification active de la position et/ou de l'orientation, et/ou à l'unité de balayage (4), en particulier pour le démarrage et/ou l'arrêt d'une opération de balayage, et/ou
• l'appareil de mesure de surface (1) présente, outre l'unité de balayage (4), une autre unité de mesure de surface (4a), en particulier une caméra infrarouge et/ou une caméra thermique, en particulier dans lequel une combinaison de coordonnées 3D, en particulier du nuage de points 3D généré à partir de celles-ci, avec des données de mesure de l'autre unité de mesure de surface (4a) est effectuée dans le cadre de la fonctionnalité de mesure de surface, et/ou
• l'engin volant (3b, 3c) présente une source d'énergie de réserve.

10. Procédé de détermination d'une pluralité de coordonnées 3D de points de mesure (15) d'une surface (7) avec un appareil de mesure de surface (1) selon la revendication 1, comprenant
• un balayage optique, en particulier point par point, déplaçable dans l'espace, des points de mesure (15) de la surface (7) au moyen d'un rayonnement de mesure optique, cohérent et collimaté (15) de direction de déviation définie, en particulier d'un rayonnement laser,
• dérivation de valeurs de distance à l'aide du rayonnement de mesure réfléchi détecté (15),
• détermination de coordonnées 3D à l'aide des valeurs de distance et des directions de déviation.

11. Procédé selon la revendication 10,
**caractérisé en ce que**,
pendant le balayage, un nuage de points 3D (16) est généré à l'aide d'au moins une partie des coordonnées 3D en particulier dans lequel
• une représentation graphique du nuage de points 3D (16) est fournie sur un écran et/ou
• une reconnaissance automatique de zones particulièrement pertinentes (regions of interest, ROI) (17) du nuage de points 3D (16) est effectuée, dans lequel, en particulier,
o une représentation graphique de la ou des zones particulièrement pertinentes (17) est effectuée sur un écran et/ou
o un deuxième balayage automatique de la ou des zones particulièrement pertinentes (17) est effectué avec l'appareil de mesure de surface (1).

12. Utilisation d'un engin volant sans pilote (3a-3c) capable de vol stationnaire, comportant un filin (2) qui est prévu pour le guidage de l'engin volant (3a-3c) dans l'air par un utilisateur (100), la position de l'engin volant (3a-3c) dans l'air étant prescrite par la longueur effective du filin (2), pour porter l'unité de balayage (4) d'un appareil de mesure de surface selon la revendication 1.

13. Produit programme d'ordinateur stocké sur un support lisible par ordinateur, ou signal de données d'ordinateur matérialisé par une onde électromagnétique, comprenant un code de programme pour la mise en oeuvre du procédé selon l'une des revendications 10 et 11 lorsque le programme est exécuté dans une unité de commande et d'évaluation d'un appareil de mesure de surface (1) selon la revendication 1 et/ou d'une unité d'utilisateur externe (5) qui y est raccordée.
